Europäisches Patentamt

European Patent Office

Office européen des brevets

(11) Veröffentlichungsnummer: **0 353 314**
**A1**

(19)

(12) **EUROPÄISCHE PATENTANMELDUNG**

(21) Anmeldenummer: 88112442.4

(22) Anmeldetag: 01.08.88

(51) Int. Cl.4: **C02F 1/40 , C02F 9/00 , B01D 17/02 , B01D 33/073 , B01D 21/24**

Die Bezeichnung der Erfindung wurde geändert (Richtlinien für die Prüfung im EPA, A-III, 7.3).

(43) Veröffentlichungstag der Anmeldung:
**07.02.90 Patentblatt 90/06**

(84) Benannte Vertragsstaaten:
**AT BE CH DE ES FR GB GR IT LI LU NL SE**

(71) Anmelder: **BAROMFITERMELOK EGYESULESE**
**Akadémia utca 1-3**
**H-1361 Budapest(HU)**

(72) Erfinder: **Szigeti, Miklos**
**8, Vérmezö utca**
**H-1012 Budapest(HU)**
Erfinder: **Sebestyen, György**
**91, Erdöalja u.**
**H-1037 Budapest(HU)**
Erfinder: **Hernyik, András**
**7/a, Bajcsy Zs. u.**
**H-6600 Szentes(HU)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**D-7500 Karlsruhe 1(DE)**

(54) **Verfahren und Anlage zur Reinigung von emulgiertes Fett enthaltendem Abwasser sowie Trommelfilter und Entleerungskonstruktion.**

(57) Verfahren und eine Anlage zur Reinigung des emulgiertes Fett enthaltenden, insbesondere aus geflügelverarbeitendem Betrieb stammenden Abwassers, sowie Trommelfilter und Entleerungskonstruktion. Federn mit einem maximalen Feuchtigkeitsgehalt von 60 Gew.% und emulgiertes Fett enthaltendes Abwasser lässt man miteinander reagieren. Die Reaktion wird durch Zufuhr von Pressluft intensiviert, indem die Fetteilchen koagulierer und zu den Federn aufschwimmen. Fetthaltige Federn werden von der Flüssigkeitsphase durch Flotation separiert, die Flüssigkeit wird durch Absetzen weiterbehandelt.

Die Anlage enthält einen Ausgleichspufferbehälter /4/, einen Feder-Fettreaktor /15/, sowie ein Klärbecken /25/ ein - Trommelfilter und eine Entleerungskonstruktion.

Fig. 1

# VERFAHREN UND ANLAGE ZUR REINIGUNG DES EMULGIERTES FETT ENTHALTENDEN, INSBESONDERE AUS GEFLÜGELVERARBEITENDEM BETRIEB STAMMENDEN ABWASSERS, SOWIE TROMMELFILTER UND ENTLEERUNGSKONSTRUKTION, INSBESONDERE ZUR DURCHFÜHRUNG DES VERFAHRENS

Der Erfindung betrifft ein Verfahren zur Reinigung des emulgiertes Fett enthaltenden, insbesondere aus geflügelverarbeitendem Betrieb/Geflügelschlachthaus/ stammenden Abwassers. Die zur Realisierung des erfindungsgemässen Verfahrens dienende Anlage bildet ebenfalls den Gegenstand der Erfindung, so zur Durchführung bestens geeigneter Trommelfilter, sowie die Entleerungskonstruckton, die zur Regelung des Wasserstands, Absaugung des Schlammes, zum Entschlickern, zur Ent leerung von Flüssigkeitsspeichern oder Behandlungsbehältern verwendet werden kann.

Der Wasserbedarf der in geflügelverarbeitenden Betrieben angewendeten Technologie ist äusserst hoch. Die zeitgemässen hygienischen Forderungen, bzw. die Gewährleistung der vorschriftsmässigen Produktqualität beanspruchen für Geflügel mit einem Lebendgewicht von 1,5 - 2,0 kg/St etwa 20 Liter spezifischen Trinkwasserverbrauch je Geflügelstück, was mit dem Entstehen einer grossen Menge von Abwasser verbunden ist. Das Abwasser enthält Sand, Geflügelexkrement, Feder, Blut, Fett, schwimmende und schwebende Stoffe, sowie sonstige Verunreinigungen. Der hohe Fettgehalt des Abwassers stellt eine eigenartige Charakteristik dar, dabei ist der Erstarrungspunkt des enthaltenen Fettes niedrig, eine Wasser-Fettemulsion kommt leicht zustande; das spezifische Gewicht der im Wasser dispergierten Fetteilchen entspricht annähernd dem spezifischen Gewicht des Wassers, so kann das emulgierte Fett in dem gespeicherten Abwasser in den Geflügelschlachthäusern in der Höhe jedwelchen Wasserstands auftreten. Aus diesem Grunde stellt die Abscheidung - Abschöpfen - des Fetts ein äusserst kompliziertes technisches Problem bei der Abwassereinigung dar. Der Extraktwert /CCl$_4$extr/ des charakterisierenden Abwasserlösemittels ist äusserst hoch, durchschnittlich 200-600 mg/l, aber in einzelnen Betriebsteilen, z.B. wo das Kram entfernt wird, kann der Wert sogar 6000-7000 mg/l erreichen. Ein weiteres Problem zeigt sich darin, dass das spezifische Gewicht der Verunreinigungen zwischen 1 = = 1 kg/dm$^3$ in den verschiedensten Werten vorkommt, was wiederum die Abscheidung ziemlich erschwert. Im allgemeinen kann die Abscheidung der Verunreinigungen aus den Abwässern des Gelfügelschlachthauses unter Anwendung der traditionellen Methoden mit entsprechender Wirksamkeit und Rationalität keinesfalls gelöst werden. Derartige Abwässer sind aus dem Standpunkt des Umweltschutzes äusserst gefährlich.

Zur Reinigung des aus Geflügelverarbeitung stammenden Abwassers pflegt man chemische und physikalische Reinigungsmethoden anzuwenden. Physikalische Methoden sind bloss zur Entfernung nicht-kolloider Fette und sonstiger Verunreinigungen geeignet, während unter Anwendung der chemischen Verfahren auch kolloidale Verunreinigungen ausgewonnen werden können /z.B. durch den Abbau der Wasser/Fettemulsion/.

Physikalische /mechanische/ Reinigungsverfahren sind einfacher, sie können mit einfacher Behandlungstechnik realisiert werden, der Kostenaufwand ist geringer, hingegen bleibt die Wirksamkeit hinter jener der chemischen Verfahren zurück.

Im allgemeinen stellen Behandlung und Deponierung des ausgewonnenen Fettes, des Schlamms und unnützbarer Materialien ein unlösbares Problem dar; bei den mit Chemikalien vorgenommenen Verfahren ist das Volumen der entstandenen Nebenprodukte /z.B. wegen Zugabe der flockenbildenden Stoffe/ höher.

Zeitgemässe Technologien wenden kombinierte mechanische und chemische Behandlungen an. Als solche soll z.B. die von der Firma "Alwatech" angewendete Lösung erwähnt werden, im Laufe deren ein Teil des Abwassers mit Luft gesättigt vorbehandelt wird, wobei das während der Vorbehandlung gewonnene Nebenprodukt als Futter verwertet wird.

Im Laufe der Abwassereinigungstechnologie der holländischen Firma "Vinitex", die eine physikalische und chemische Stufe gleicherweise enthält, wird das Abwasser ebenfalls mit Luft gesättigt, die Behandlung ist auf die Abscheidung des Fettes und sonstiger Verunreinigungen gerichtet. Im dem sog. Flockungssektor mit Rohrbündeln wird - bei unverändertem Energieniveau - eine turbulente Strömung hervorgerufen, die die Vermischung und Verflockung der zugegebenen Chemikalien fördert.

Unter Anwendung der obenbeschriebenen Verfahren kann eine wirksame Abwassereinigung realisiert werden, hingegen sind die Investitions- und Betriebskosten äusserst hoch, in der Hinsicht der Mechanik ist das Verfahren kompliziert, der Raumbedarf ist gross, dabei ist der Aufwand an lebendiger Arbeit auch bedeutend. Dabei sind die "allgemeinen" Reinigungstechnologien unfähig sich den eigenartigen Eigenschaften der aus der Geflügel industrie stammenden Fette und sonstiger Verunreinigungen anzupassen, die die Verarbeitung begleitenden sonstigen Umstände werden überhaupt nicht, oder nur teilweise in Betracht genommen, so sind diese Verfahren zur wirtschaftlichen Lösung der kompletten Reinigung der Abwässer der Geflügelindustrie ungeeignet.

Der Erfindung wurde die Aufgabe gestellt, eine wirtschaftliche Lösung zur Reinigung der emulgiertes Fett enthaltenden, sich in der Geflügelindustrie, insbesondere in Schlachthäusern ergebenden Abwässer zu entwickeln, unter Zuhilgenahme deren der grösste Teil des Fettes und sonstiger Verunreinigungen einfach und mit höchster Sicherheit aus dem Abwasser abgeschieden werden können, mit anderen Worten, der Fettgehalt, Schwimm-und Schwebestoffe und sonstige Verunreinigungen auf das Minimum herabgesetzt werden.

Die Erfindung beruht auf der Erkenntnis, indem die feuchte Feder - falls der Wassergehalt unter 60 % liegt -eine Fettmenge, die dem etwa 4-5-fache des Eigengewichts entspricht, auf ihrer Oberfläche abzubinden fähig ist, bzw. diese aus dem Abwasser ausscheiden kann.

Weiterhin beruht die Erfindung auf der Erkenntnis, dass durch Flotation, d.h. durch die Einführung von Pressluft in die Flüssigkeitsmasse von unter her die emulgierten Fetteilchen koaguliert werden können, wonach die koagulierten grösseren Körner bereits leicht zu der im Bereich der Wasseroberfläche schwimmenden Federmasse aufschwimmen, wodurch die Berührung zwischen Fett und Feder gewährleistet werden kann. Dem mit Feder vorgenommenen Arbeitsgang der Fettentfernung folgend können die im Abwasser noch rückgebliebenen emulgierten schwebenden Fetteilchen durch Flotation leicht auf die Wasseroberfläche aufgetrieben werden, wo die dort sich ansammelnde Fettschicht leicht abgeschöpft werden kann.

Zuletzt beruht unsere Erfindung auf der Erkenntnis, indem wenn das von dem Geflügelschlachthaus kommende, sogenannte fetthaltige Abwasser von den die Federn fördernden Abwässern abgesondert behandelt wird, steht das Federmaterial zur Abscheidung des Fettes in dem Betrieb selbst zur Verfügung.

Aufgrund der Erkenntnisse haben wir die gestellte Aufgabe erfindungsgemäss so gelöst, indem im Laufe des erfindungsgemässen Verfahrens aus dem von den stückigen Stoffen durch Filtrierten befreiten Abwasser das Fett durch Flotation abgesondert wird, desweiteren die Verunreinigungen, deren spezifisches Gewicht jenes des Wassers übertrifft oder annähernd jenem gleich ist, durch Absetzen abgeschieden werden.

Die wesentliche Charakteristik des Verfahrens besteht darin, dass mindestens die Hälfte der in dem Abwasser vorhandenen emulgierten Fettmenge, d.h. das Abwasser mit den Geflügelfedern in Reaktion tritt, wodurch das Fett auf den Federn abgebunden wird; die fetthaltigen Federn werden aus dem Abwasser mit ver ringertem Fettgehalt entfernt, wodurch das Fett separiert wird. Es wird als vorteilhaft betrachtet, wenn man das Abwasser mit Federn mit einem Wasserinhalt von höchstens 60 %, vorteilhaft 50 bis 60 Gew.% reagieren lässt.

Bei einer weiteren Realisierungsweise des erfindungsgemässen Verfahrens lässt man das zu reinigende Abwasser mit Geflügelfedern mit einem Wassergehalt von 6 bis 15 Gew.%, vorteilhaft 10 Gew.%, aber höchstens 60 Gew.% reagieren.

Im Sinne einer weiteren Charakteristik der Erfindung lässt man die nassen Federn mit dem fetthaltigen Abwasser so reagieren, indem die Phasen mindestens 3 Minuten lang, vorteilhaft 20 bis 30 Minuten lang schonend miteinander in Berührung gebracht werden, undzwar in einer turbulenzfreien laminären gemeinsamen Strömung.

Ein vorteilhafte Ausführungsweise des erfindungsgemässen Verfahrens kann dadurch gekennzeichnet werden, dass im Laufe der Reaktion zwischen dem fetthaltigen Abwasser und den Federn Pressluft in den unteren Bereich der Abwassermenge eingeführt wird, wodurch man die emulgierten Fetteilchen koagulieren und aufschwemmen lässt, wodurch die Fetteilchen zu dem oberen Bereich der Oberfläche der Abwassermenge gelangen. Zweckmässig wird der Abwassermenge Pressluft mit einem Druck von 2 bis 10 bar, wenigstens aber 4 bar zugeführt.

Es ist weiterhin als zweckdienlich betrachtet, wenn die Pressluft, noch eher als sie in die Abwassermenge eingespeist wird, mit Wasser - vorteilhaft mit einem Teil des noch emulgiertes Fett enthaltenden Abwassers -vermischt und darin absorbiert wird, wonach das mit Luft gesättigte Wasser in die zu reinigende Abwassermenge eingespeist wird, wo man diese bei einem niedrigeren - im wesentlich atmosphärischen - Druck expandieren lässt, wonach die im Wasser enthaltenen emulgierten Fetteilchen und sonstige Verunreinigungen an der äusseren Oberfläche der so entstanden Luftblasen abgebunden und zu den Federn audgetrieben werden.

Nach einer weiteren Charakteristik der Erfindung wird dem Abwasser - der Reaktion mit den Federn vorangehend - ein die Präzipitation förderndes Medium auf Proteinbasis, z.B. Lignosulfonat und/oder eine den Emulsionabbau fördernde Säure, z.B. Schwefelsäure zugegeben. Die Behandlung mit Säure wird in erster Reihe bei Abwässern, die aus der Verarbeitung von Wassergeflügeln stammen, verwendet, da der grösste Teil der entstandenen wertvollen Federn auf andere Weise, wirtschaftlicher verwertet werden kann und nur ein Teil dem Abwasserreinigungssystem zugeführt wird.

Im Sinne einer weiteren Massnahme wird das Abwasser der Reaktion mit der Feder vorangehend auf etwa 20 C° abgekühlt.

Bei dieser Temperatur sind nämlich die Umstände der Fettausscheidung optimal, andererseits kann durch die Kühlung in dem Verarbeitungsbetrieb verwertbares warmes Nutzwasser gewonnen werden.

Nach einer weiteren Charakteristik der Erfindung lässt man das emulgiertes Fett enthaltende Abwasser der Reaktion mit den Federn vorangehend flotieren, wonach die auf diese Weise auf die Oberfläche aufgetriebene, mit Fett angereicherte Abwasserschicht dekantiert und mit den Federn reagieren gelassen wird. Es ist als vorteilhaft betrachtet, wenn man das Abwasser - dessen Fettgehalt durch die Reaktion zwischen Feder und Fett verringert worden ist - durch Flotation weiterbehandelt, wonach das durch Flotation auf die Oberfläche geratene Fett durch Dekantieren entfernt wird; in der nächsten Arbeitsphase lässt man das Abwasser absetzen, wodurch durch die Separierung nach spezifischem Gewicht die Verunreinigungen, deren spezifisches Gewicht grösser ist, als jenes des Wassers oder jenem annähernd ist, entfernt werden; vorteilhaft wird das von den fetthaltigen Federn separierte Abwasser mit verringertem Fettgehalt - der Flotationsbehandlung vorangehend - vorteilhaft mechanisch gefiltert, desweiteren wird dem von den fetthaltigen Federn befreiten Abwasser mit verringertem Fettgehalt, der Flotationsbehandlung vorangehend fettarmes Wasser zugemischt, das während der Entwässerung der zur Feder-Fettreaktion zu verwendenden Federn im Geflügelschlachthaus während des Abrupfens entstand, wodurch der relative Fettgehalt - die Fettkonzentration - des von den fettigen Federn abgetrennten Abwassers verringert wird.

Die bei der Entwässerung der Federn übrigbleibende Wassermenge wird zur der Federförderung rezirkuliert.

Die zurRealisierung des erfindungsgemässen Verfahrens geeignete Anlage weist eine Entwässerungseinheit /einen Filter/ auf, womit die stückigen Verunreinigungen entfernt werden können, desweiteren sind ein zur flotierenden Abwasserbehandlung geeigneter Behälter und ein Absetzobjekt enthalten.

Die wesentliche Charakteristik der Anlage besteht darin, dass in dem unteren Teil, zur Aufnahme des von der Entwässerungseinheit ankommenden Abwassers dienendem Teil ein Ausgleichbehälter mit einer Belüfungskonstruktion enthalten ist; desweiteren ein Reaktor vorgesehen ist, in dem das emulgiertes Fett enthaltende Abwasser und die Federn in Berührung gebracht werden; in dem Objekt - das ebenfalls einen Teil der Anlage bildet - wird das Fett aus dem den Reaktion verlassenden Abwassers mit verringertem Fettgehalt durch Flotation abgeschieden, auch die Verunreinigungen, deren spezifisches Gewicht jenem des Wassers entspricht oder höher ist, werden hier abgesetzt.

Es ist als zweckmässig betrachtet, wenn der Ausgleichbehälter, der zweckmässig das Format eines stehenden Zylinders aufweist, zur Ableitung der enthaltenen Flüssigkeit aus dem der Oberfläche nahe liegenden Bereich, sowie zur Regelung des Flüssigkeitsstands ein zur vollkommenen Entleerung des Behälters geeignetes, zweckmässig zentral angeordnetes Überfluss-Entleerungsventil aufweist; das Rohrventil hat einen hohlen, unten und oben geöffneten aufhebbaren-senkbaren Ventilkörper des Formats eines länglichen Zylinders und eine, den Oberteil abdichtend umgebende, z.B. mit einem O-Ring abgedichtete abwärts-aufwärts bewegbare, unten und oben offene Rohrhülse; der Ventilkörper ist mit einem kegeligen Unterteil ausgebildet, der sich in die, in der Bodenplatte des Behälters ausgestaltete, sich in dem tiefstliegenden Punkt sich befindende Entleerungsöffnung anpasst und diese öffnet bzw. verschliesst.

Es ist weiterhin als vorteilhaft betrachtet, wenn in dem Ausgleichpufferbehälter ein Wärmeaustauscher angeordnet ist und dem Behälter ein Dosiermittel angeschlossen ist, womit das Koagulierungsmedium und/oder Chemikalien zugegeben werden; vorteilhaft mündet eine federeinspeisende Leitung in den Ausgleichspufferbehälter. Durch diese Massnahmen können einerseits optimale Temperaturverhältnisse zur Fettabscheidung gewährleistet werden, es besteht die Möglichkeit zur Verwertung des Abfalls, andererseits kann eine intensivere Koagulation des Fettes erreicht werden; zuletzt, wenn - als alternative Lösung - Federn in den Ausgleichbehälter geleitet werden kann die Reaktion schon hier teilweise stattfinden.

Nach einer weiteren Charakteristik der Erfindung ist zwischen dem Reaktor und dem dekantierenden-absetzenden Objekt eine, zur Abscheidung der stückigen Verunreinigungen geeignete Filtereinheit, vorteilhaft ein Bogensieb oder ein Filter mit Drehtrommel eingefügt. Durch diese Massnahme wird die Belastung des Objekts herabgesetzt.

Eine weitere Ausführungsform kann dadurch gekennzeichnet werden, dass in die, den Reaktor mit dem dekantierenden-absetzenden Objekt verbindende, das Abwasser mit vermindertem Fettgehalt fördernde Leitung -zweckmässig an einem Punkt vor der Filtereinheit -eine Leitung einmündet, die das Wasser mit geringem Fettinhalt, das aus Entwässerung der zur Feder-Fettreaktion zu verwendenden Federn stammt, fördert. Auf diese Weise kann der Fettgehalt bzw. die Fettkonzentration des in das dekantierende-absetzende Objekt gelangenden Abwassers herabgesetzt werden.

Eine weitere mögliche Ausführung der erfindungsgemässen Anlage kann dadurch gekennzeichnet werden, dass das dekantierende-absetzende Becken mit, auf der resultierenden Fortschrittsrichtung der darin fliessenden Flüssigkeit querliegenden Trennwänden in mindestens drei Räume unterteilt ist; in den ersten Flotationsraum, der zur Abscheidung der auf die Flüssigkeitsoverfläche aufschwemmbaren Verunreinigungen dient, mündet die das Abwasser einspeisende Leitung ein; in dem unteren Teil des Raumes befindet sich die Belüftungskonstruktion, unter der den Raum begrenzenden Trennwand ist die den ersten mit dem zweiten Raum verbindende Durchfluss öffnung ausgestaltet, zu der der Beckenboden mit einer Neigung ausgebildet ist; dem Bereich der Flüssigkeitsoberfläche ist eine zur Dekantierung des Schlammes dienende Entleerungskonstruktion angeschlossen. Dem unteren Bereich des zweiten Raumes, der ein Absetzbecken ist und zur Abscheidung der Verunreinigungen, deren spezifisches Gewicht jenes des Wassers übertrifft, dient, ist zweckmässig zu dem in dem tiefsten Teil ausgestalteten Sumpf eine zum Absaugen geeignete Entleerungskonstruktion angeschlossen; über dem oberen Ende der zwischen dem zweiten und dritten Raum vorhandenen Trennwand ist die Durchflüssöffnung ausgestaltet, die die Flüssigkeitskommunikation zwischen den Räumen sichert. In dem dritten Raum, der ein Absetzraum ist, und zur Abscheidung der Verunreinigungen, deren spezifisches Gewicht jenem des Abwassers entspricht oder jenes übertrifft, dient, ist ein Überfluss-Entleerungsrohrventil angeordnet, das die Flüssigkeit aus dem der Oberfläche nahe liegenden Bereich abführt, den Flüssigkeitsstand im Becken regelt und den dritten Raum entleert.

Das hier angewendete Rohrventil weist dieselbe strukturelle Gestaltung auf, wie das zu dem Ausgleichpufferbehälter verwendete Rohrventil.

Nach einer weiteren Charakteristik der Erfindung ist in dem dritten Raum, in dessen oberem Bereich eine Absetzlenkeinheit angeordnet, die aus miteinander paralle len, im wesentlichen Z-förmigen Lamellen zusammengesetzt ist und das Aufschwimmen der Schwebestoffe verhinert.

Es ist als zweckmässig betrachtet, wenn die unter der ersten Trennwand vorhandene und über der zweiten Trennwand ausgestaltete Durchflüssöffnung einen mit aufwärts und abwärts bewegbaren Plattenteilen veränderlichen Querschnitt aufweisen und in dem Unterteil der ersten Trennwand und in dem Oberteil der zweiten Trennwand auf den einander gegenüberliegenden Seiten je ein Ausschnitt vorhanden ist. Durch diese Massnahmen kann einerseits die Aufenthalts/Behandlungs/dauer der Flüssigkeit beeinflüsst bzw. die Länge des Strömungswegs verlängert werden.

Zur Gestaltung des Feder-Fettreaktors stehen zahlreiche Möglichkeiten zur Verfügung. In dem einfachsten Fall wird der Reaktor von dem über dem Sammelbehälter angeordneten Filter mit Drehtrommel gebildet.

Bei einem weiteren möglichen Ausführungsbeispiel ist in dem Unterteil des Feder-Fettreaktors eine Belüftungskonstruktion vorgesehen, über welcher im Bereich des Wasserstands ein über die horizontale Achse verdrehbares, das emulgiertes Fett enthaltende Abwasser zuführendes Speiseorgan angeordnet ist, wobei die Einspeisung durch ein unter den Wasserstand eintauchendes rohrförmiges Gefäss erfolgt; in der Nähe der Einspeisung, auf dem der Zufuhrstelle der Federn zugewandten Ende ist eine nach unten sich erstreckende Platte an geordnet, deren Schenkel unter den Wasserstand sich eintaucht. Von dem Behälter führt ein schräges Förderband über den Flüssigkeitsstand. Dem Förderband schliesst sich ein, die fettigen Federn entwässerndes Band an, unter dem eine die flüssige Phase in den Behälter rückführende, nach innen neigende Fläche ausgebildet ist; dem Behälter, vorteilhaft dem in dem teifsten Bereich liegenden Supf ist eine, das Abwasser mit dem verringerten Fettinhalt entfernende, zur vollkommenen Entleerung des Behälters und zur Regelung des Wasserstands während des Betriebs geeignete Entleerungtskonstruktion angeschlossen. In diesem Fall ist es vorgeschlagen, die Federn und das Abwasser auf dem einen Ende des Behälters einzuspeisen, hier ist der Behälter mit einer in die Bodenplatte bogenförmig übergehenden Wand ausgestaltet, dem untersten Punkt deren der Sumpf angeschlossen ist. Das Austragband ist mit Schiebelementen, z.B. mit Gummifingern versehen und liegt an dem der Zufuhrstelle gegenüberliegenden Ende des Behälters, entlang einer schrägen Wandstrecke, damit parallel, wobei die verdrehbare Platte mit der Ausnahme der Einfuhr- und Ausfurstelle die gesamte Behälterfläche in der Draufsicht überdeckt.

Nach einem weiteren Ausführungsbeispiel weist der Feder-Fettreaktor ein Becken auf, in dessen unterem Bereich eine Belüftungskonstruktion angeordnet ist, an dem einen Ende des Beckens werden die Federn und das fetthaltige Abwasser eingeleitet, an dem anderen, der Zufuhrstelle gegenüberliegenden Ende des Beckens ist ein Filter mit Drehtrommel über den Wasserstand ausgeführt, undzwar mit seinem oberen Ende; der Filter ist mit schräger geometrischer Achse ausgestaltet, das untere Ende taucht sich in das Abwasser ein und ist zur Trennung der fettigen Federn und des Abwassers mit niedrigerem Fettgehalt geeignet; unter dem unteren Ende des Drehtrommelfilters ist eine Mulde zur Rückführung der filtrierten Flüssigkeitsphase ausgestaltet. Dem Becken, vorteilhaft dem am tiefsten liegenden Sumpf ist eine Entleerungskonstruktion angeschlossen, die zur Ableitung des Abwassers mit niedrigerem Fettgehalt, zur vollkommenen Entleerung des Behälters und zur Regelung des Wasserstands während des Betriebs geeignet ist. In diesem Fall scheint es zweckdienlich zu sein, wenn ein das fettige Abwasser einspeisendes, mit dem unteren Ende unter den Flüssigkeitsstand sich eintauchendes, rohrförmiges Gefäss vorgesehen ist. Die Belüftungskonstruktion entzieht sich zwischen der Endwand des Beckens, der der Einspeisung zugewandten Endwand und dem Filter mit der Drehtrommel.

Es ist weiterhin als zweckdienlich betrachtet, wenn der - zweckmässig mit veränderlicher Umlaufzahl arbeitende - Drehtrommelfilter mit einer perforierten zylindrischen Trommel versehen ist und in dem Inneren derselben ein sich entlang der Innenfläche der Trommel entlangziehender, mit der Trommel mitdrehender Ring mit Schneckengang angeordnet ist, dessen Höhe zweck mässig kleiner ist, als die Hälfte des Trommelradius.

Eine weitere Ausführungsform kann dadurch gekennzeichnet werden, dass der Feder-Fettreaktor ein einen im wesentlichen dreieckigen Querschnitt aufweisendes, von unten nach oben sich erweiterndes Becken aufweist, in dem zwei Förder- und Entwässerungskonstruktionen angeordnet sind, die in gebrochener Linie geführt, mit Schiebelementen, z.B. Gummifingern versehen sind, die beiden Bänder verlaufen miteinander parallel, in einem gewissen Abstand voneinander. Die Enden der Konstruktionen liegen an den beiden gegenüberliegenden Seiten des Beckens, über dem Flüssigkeitsstand; dem Becken, vorteilhaft dem an tiefsten liegenden Sumpf ist eine Entleerungskonstruktion angeschlossen, undzwar zur Entfernung des Abwassers mit verringertem Fettgehalt, das nach der Trennung der fetthaltigen Federn und der flüssigen Phase in das Becken rückfliesst, zur vollkommenen Entleerung des Beckens und zur Regelung des Wasserstands während des Betriebs.

In diesem Fall ist es zweckmässig, wenn das untere Band mit beiden Enden über das obere Band hinausreicht, desweiteren - die Fortschrittsrichtung zugrundenehmend -das vordere Ende des unteren Bands als die Zufuhrstelle der feuchten Federn, das hintere Ende als die Ausfuhrstelle der fetthaltigen Federn ausgestaltet sind; es ist weiterhin als zweckdienlich betrachtet, wenn die Förder- und Entwässerungskonstruktion so ausgestaltet ist, dass der Abstand zwischen den Bändern geändert werden kann. Als Erfolg der letzterwähnten Massnahme kann das Wasser aus der sich zwischen den Bändern befindenden nassen Federmasse ausgepresst werden.

Nach einer weiteren Charakteristik der erfindungsgemässen Anlage weist der Feder-Fettreaktor ein über dem auf Füssen gestellten Behälter angeordnetes, mit Schiebelementen, z.B. Gummifingern versehenes endloses Förderband auf, dessen oberem Strang eine oben offene Mulde angeschlossen ist, deren Breite geringer ist als die Breite des Bandes; im Bereich des unteren Endes des Förderbands ist die Zufuhrstelle der Federn, im höher liegenden Bereich ist die Zufuhrstelle des fetthaltigen Abwassers ausgestaltet, während die fettigen Federn auf dem oberen Ende des Förderbands abgeführt werden, zur Abführ des Abwassers mit dem verringerten Fettgehalt ist der Behälter mit einem Ausflusstutzen versehen. Zweckmässig können die den Behälter unterstützenden Füsse wenigstens an der einen Seite in der Höhe eingestellt werden, wodurch die Niegung des Förderbands geändert werden kann.

Eine weitere Ausführung kann dadurch gekennzeichnet werden, dass der Feder-Fettreaktor mit einem oberen Förderband und einem darunter liegenden unteren Förderband ausgestattet ist, unter dem letzteren befindet sich ein die fetthaltigen Federn aufnehmender Behälter; dem oberen Strang des oberen Bands schliesst sich eine unten offene Mulde an, über welcher in einem - zur Zu fuhr der Federn und des fettenthaltenden Abwassers dienenden - Endbereich ein aus dem zugeführten Abwasser einen Wasservorhang bildender Staukörper angeordnet ist, wobei die Zufuhrstelle der Federn sich vor dem Staukörper, vorteilhaft in der unmittelbaren Nähe des Bandendes befindet; unter dem oberen Band befindet sich eine Mulde mit schrägem Boden, die die flüssige Phase, die bei der Trennung der fettigen Federn und des Abwassers mit niedrigerem Fettinhalt entstanden ist, ableitet. Das untere Band ragt unter dem oberen Band am Ende, wo die Federn abgegeben werden, hervor, wodurch es die von dem oberen Band kommenden fetthaltigen Federn aufnehmen kann, das untere Band ist als ein reversibles Legeband ausgestaltet.

Die wesentliche Charakteristik einer weiteren Ausführungsform besteht darin, dass der Fett-Federreaktor einen Zyklon aufweist, in dem die aus dem Ausgleichbehälter ankommenden, dort teilweise mit dem Fett reagierten Federn und das Abwasser in Berührung gebracht werden, desweiteren ist eine Entwässerungseinheit vorgesehen, die das aus dem Zyklon austretende Gemisch in fetthaltige Federn und flüssige Phase zertrennt.

Der den Gegenstand der Erfindung bildende Trommelfilter weist eine, auf dem Gestell angeordnete perforierte mit dem Getriebe verbundene Trommel auf, in der Trommel ist ein, ebenfalls mit dem Getriebe verbundener Rotor angeordnet und unter der Trommel ist der Flüssigkeitssammelbehälter angeordnet.

Der Trommelfilter kann dadurch gekennzeichnet werden, dass der Rotor durch einen, sich entlang der Innenfläche der Trommel erstreckenden, eine von jener der Trommel abweichende Umfangsgeschwindigkeit ergebenden Ring mit Schneckengang gebildet ist. Es ist als vorteilhaft betrachtet, wenn der Ring sich in der unmittelbaren Nähe der inneren Mantelfläche der Trommel, vorteilhaft in voller Länge erstreckt, und während der Drehbewegung von der Mantelfläche mitgenommen wird, desweiteren ist die Höhe des Ringes kleiner als die Hälfte des Trommelradius, desweiteren ist der Ring so mit dem Getriebe verbunden, dass dieser in dem gleichen Sinn, bzw. in einem entgegengesetzten Sinn gegenüber der Trommel sich drehen könne.

Eine andere Ausführungsform des Trommelfilters kann dadurch gekennzeichnet werden, dass die geometrische longitudinale Mittelachse der Trommel von dem Zufuhrende ausgehend, in Richtung des Auslassendes geneigt ausgebildet ist und über zweckmässig in vertikaler Richtung stellbare Füsse verfügt, die die Hebung und Senkung des Trommelfilters, des Zufuhrendes der Trommel und dadurch die Änderung des Winkels, den die longitudinale geometrische Mittelachse und die Horizontale miteinander einschliessen, ermöglichen.

Es wird weiterhin als zweckmässig betrachtet, wenn die Trommel und der zweckmässig mit longitudinalen Stäben ausgespreizte Ring von einem gemeinsamen Getriebe mit endlosen Treibgurten und mit Treibscheibenpaaren - die voneinander abweichende Durchmesser aufweisen - so angetrieben werden, dass abweichende Geschwindigkeiten und gleichsinnige oder entgegengesetzte Drehungen sich ergeben.

Die den Gegenstand der Erfindung bildende Entleerungskonstruktion dient zur Abfuhr der Flüssigkeit von einem die Flüssigkeit speichernden und/oder behandelnden Objekt, oder einem Becken oder Behälter, insbesondere zum Dekantieren des Schlammes oder Absaugen desselben, zur Regelung des Wasserstandes und die wesentliche Characteristik besteht darin, dass aus dem Inneren des Objekts ein Rohrstutzen ausgeführt ist, dem Rohrstutzen - ausserhalb des Objekts und abgedichtet -ein rundum die geometrische Achse des Rohrstutzens verdrehbares Rohrglied angeschlossen ist.

Es ist als vorteilhaft betrachtet, wenn der aus dem Objekt hervorragende Rohrstutzen über ein Rohr verfügt, dessen Längsachse auf der geometrischen Längsachse des Stutzens senkrecht verläuft, wobei das Rohr mit einem Bogenrohr - vorteilhaft 90˚ - ausgestaltet ist; das Bogenrohr dient zum Anschluss an den Rohrstutzen, von aussen her, vorteilhaft durch die Zwischenschaltung eines elastisch deformierbaren O-Dichtungsringes; dem mit dem sich anschliessenden Ende - hier wird der Anschluss an den aus dem Objekt hervorragenden Rohrstutzen gemeint - gegenüberliegend ist ein abgedichtet verdrehbarer Dichtungskopf angeschlossen.

Nach einer weiteren Charakteristik der Erfindung ist der Entleerungskopf dem zu dem Rohr gehörenden Bogenrohr - zweckmässig 90˚ - angeschlossen, undzwar mit Hilfe eines die relative Verdrehung und axiale Bewegung der sich einander anpassenden Glieder nicht verhindernden, elastisch deformierbaren O-Dichtungsringes.

Insbesondere bei der vollkommenen Entleerung des Objekts und/oder beim Absaugen des Schlammes ist es vorteilhaft, wenn das Rohrglied so ausgebildet ist, dass es unter die Bodenplatte des Objekts in einem beliebigen Mass eingedreht werden kann.

Die Erfindung wird anhand einiger vorteilhaften Ausführungsbeispiele der erfindungsgemässen Anlage, sowie einiger Teileinheiten unter Bezugnahme auf die beiliegenden Zeichnungen näher erläutert. Es zeigen

Fig. 1 - den schematischen Längsschnitt der Anlage /Schaltbild/,

Fig. 2 - eine vorteilhafte Ausführung der Trennwände des dekantierenden-absetzenden Objekts der Anlage nach Fig. 1, ohne die den Querschnitt regelnden Plattenteile,

Fig. 3 bis 8 - die schematische Darstellung der verschiedenen Ausführungsmöglichkeiten des Reaktors, in dem die Federn und das Abwasser in Berührung gebracht werden,

Fig. 9 - die Seitenansicht des erfindungsgemässen Trommelfilters, wobei der Aussenmantel teilweise entfernt worden ist,

Fig. 10 - die dem Pfeil 8 in Fig. 9 angedeutete Sicht,

Fig. 11 - die schematische Seitenansicht der Entleerungskonstruktion,

Fig. 12 - die Draufsicht der Konstruktion nach Fig. 11,

Fig. 13 - den Querschnitt entlang der Linie F-F in Fig. 12,

Fig. 14 - den Schnitt des Überfluss-Entleerungsrohrventils nach Fig. 1 in grösserem Masstab dargestellt.

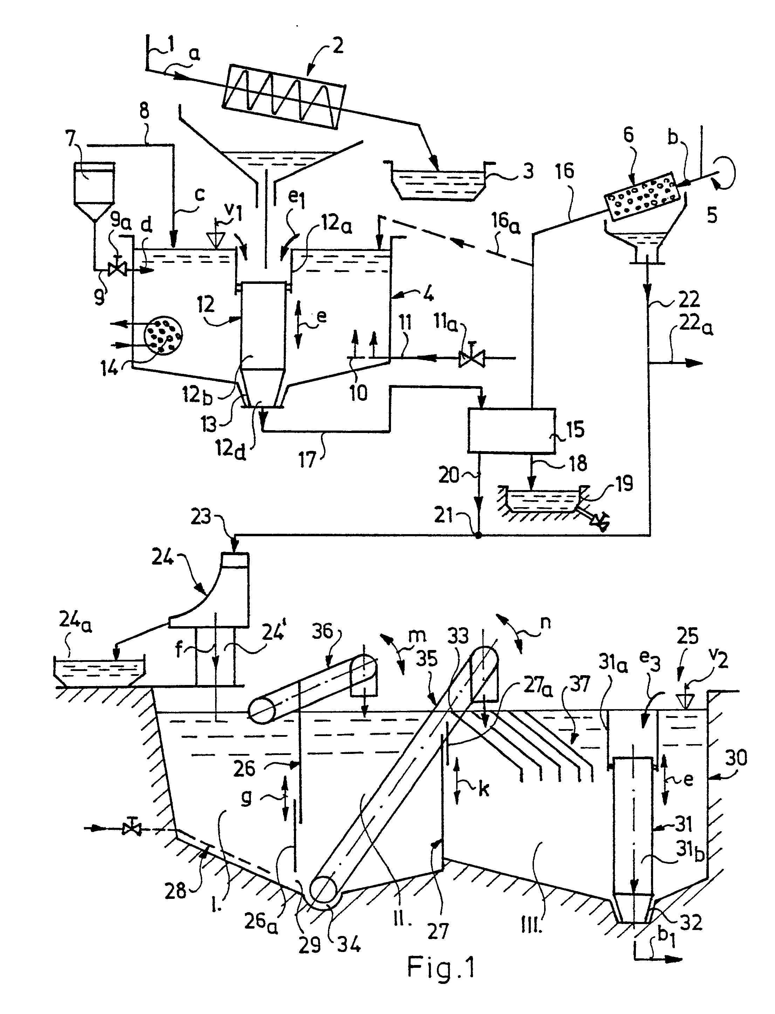

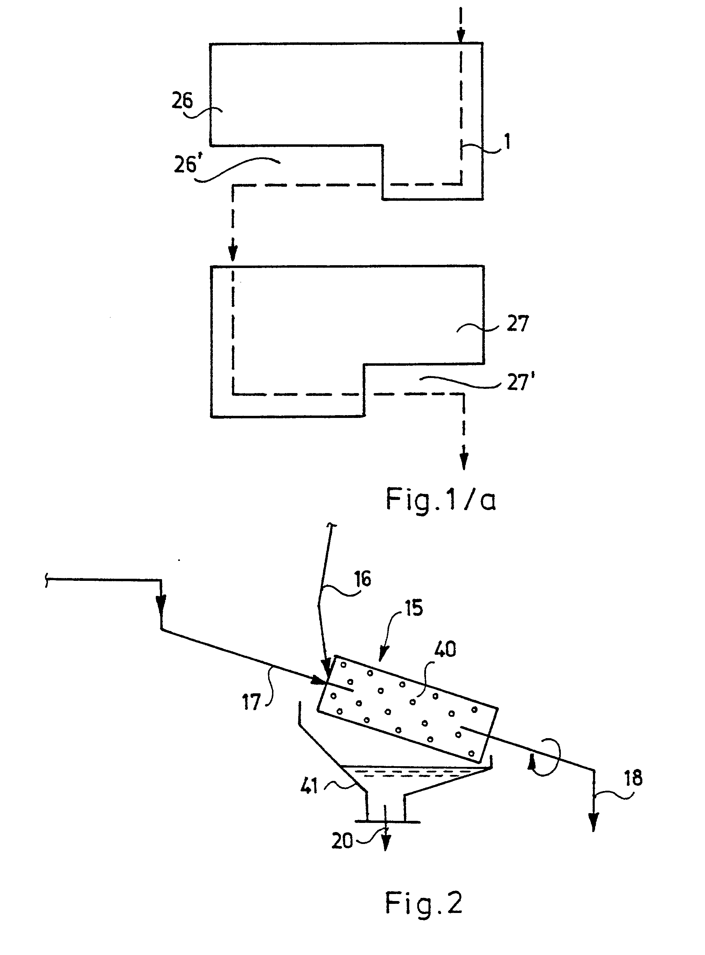

Die in Fig. 1 dargestellte Anlage weist eine Entwässerungseinheit auf, die bei unserem Ausführungsbeispiel durch einen Separator mit Drehtrommel gebildet ist, in den über die geschlossene Leitung 1 /Pfeil a/ ein Gemisch ankommt, das aus Fett, technologischem Wasser und aus aus dem geflügelverarbeitenden Betrieb /Geflügelschlachthaus/ stammenden Abfall aus den Prozessen des Entweidens, der Stückelung und Vorkühlung besteht. 'Anstatt des Separators mit Drehtrommel kann z.B. ein Bogensieb oder jedwelche zweckdienliche Konstruktion verwendet werden./

Die Entwässerungseinheit kommuniziert mit dem Kontainer 3 und dem Ausgleichspufferbehälter 4, der das Format eines stehenden Zylinders aufweist, die Bodenplatte des letzteren neigt zu dem Mittelpunkt.

Desweiteren enthält die Anlage eine Entwässerungseinheit 6, die zur Trennung des aus dem Rupfbetrieb über die Rohrleitung 5 ankommenden /Pfeil b/, aus Abwasser und Federn bestehenden Gemisches dient. Bei dem hier geschilderten Ausführungsbeispiel wird auch zu diesem Zwecke ein Separator mit Drehtrommel verwendet, aber man kann auch ein Bogensieb verwenden.

In den Ausgleichspufferbehälter 4 mündet die Leitung 8, in die von den sonstigen Betriebsteilen ankommende, im Laufe der Stückelung und Verpackung entstehende Abwässer eingespeist werden /Pfeil o/. Der Behälter 4 kommuniziert dabei mit dem Behälter 7, aus dem die Chemikalien dosiert werden, z.B. mit einem säurespeichernden Fallbehälter, undzwar über die Verschlussarmatur 9a enthaltende Leitung 9. Säurezufuhr ist mit dem Pfeil d veranschaulicht. In dem Bodenteil des Behälters 4 ist eine Belüftungskonstruktion angeordnet, die z.B. durch ein perforiertes Rohrstück oder ein Rohrgitter gebildet werden kann, die über die mit diskontinuierlicher Linie bezeichnete Leitung 11 - in die die Verschlussarmatur 11a eingefügt ist - mit der /hier nicht dargestellten/ Pressluftquelle verbunden ist, die zweckmässig Pressluft mit einem Druck von 2-10 bar, zweckdienlich 4 bar liefert. Es besteht die Möglichkeit zuerst dem Wasser - vorteilhaft einem Teil des fetthaltigen Wassers - beizumischen und danach in den Pufferbehälter 4 einzuspeisen. In dem mit Pressluft angereicherten Wasser sichern wir einen "mit Luft gesättigten" Zustand, d.h. die Luft wird im Wasser absorbiert. Wir lassen das mit Luft gesättigte Wasser in dem Behälter 4 und/oder in der Rohrleitung 11 expandieren /Ausgleich beim atmosphärischen Druck/. Die Fläche der Luftblasen nimmt während der Expansion zu, wodurch diese das im Wasser vorhandene Fett koagulieren lassen, abbinden und auftreiben.

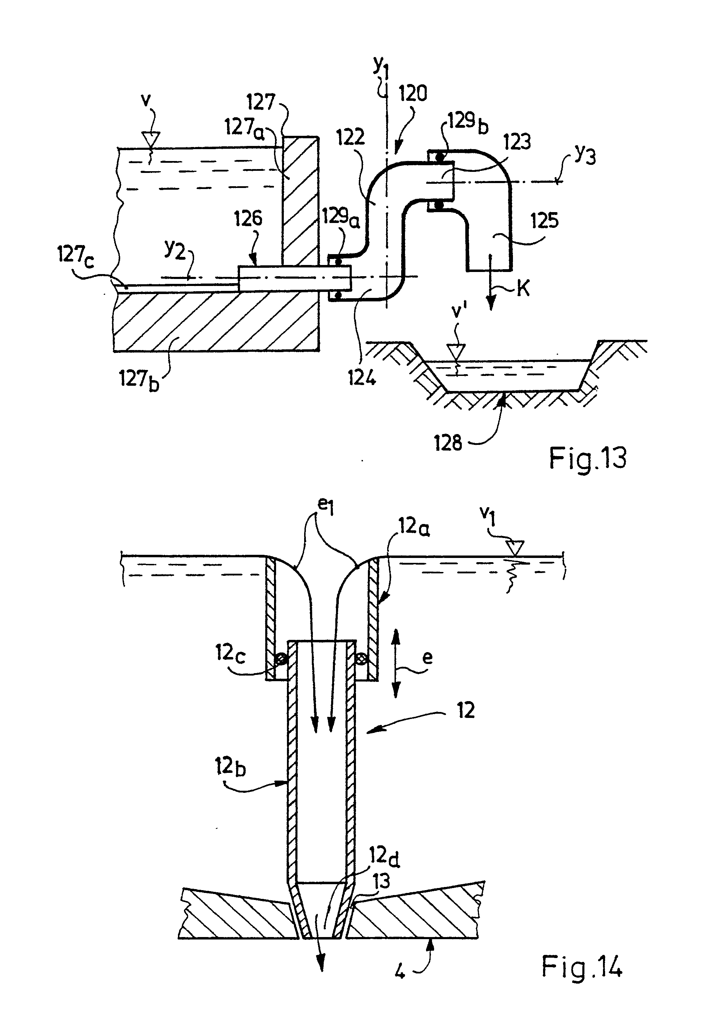

In dem Ausgleichspufferbehälter 4 ist ein Überfluss-Entleerungsrohrventil 12 angeordnet /siehe Fig. 1 und 14/, dessen unten und oben offener hohler Ventilkörper 12a, der unten kegelig ausgebildet ist und das Format eines länglichen Zylinders aufweist, mit seinem Oberteil in die Rohrhülse einpasst, die wiederum in den oberen Teil des Behälters 4 hineinragt.

Die Rohrhülse kann auf- und abwärts bewegt werden /siehe den Doppepfeil e/, wodurch der Wasserstand $v_1$ geregelt werden kann. Das Überlauf-Entleerungsrohrventil 12 funktioniert nämlich so, indem im Normalbetrieb die Flüssigkeit den Pfeilen $e_1$ entsprechend hindurch den Flansch der Rohrhülse 12a überfällt, und - wie es in der Fig. 14 wohl ersichtlich ist - in Richtung des Pfeils $o_2$, über die untere Öffnung 12d des rohrförmigen Ventilkörpers 12b austritt. In Fig. 14 ist auch der aus Gummi verfertigte O-Dichtungsring 12o dargestellt, der zwischen der Innenfläche der Rohrhülse 12a und der Aussenfläche des Ventilkörpers 12b angeordnet ist und den Durchfluss des Wassers zwischen den beiden Rohren verhindert, wenn die Rohrhülse 12a im Verhältnis zu dem Ventilkörper 12b - zwecks Einstellung des Wasserstands $v_1$ - abwärts oder aufwärts bewegt wird. Wenn die Absicht besteht, den Behälter 4 vollkommen zu entleeren, wird der Ventilkörper 12b nach oben gezogen, wodurch der kegelige Teil aus der Sperrstellung in der Entleerungs öffnung 13 aufgehoben wird, durch die freigewordene Entleerungsöffnung kann die Flüssigkeit den Behälter verlassen.

In dem Behälter 4, unter dem Wasserstand $v_1$, ist auch der als Rohrbündel ausgestaltete Wärmeaustauscher 14 angeordnet, der einerseits die technologische Kühlung des in dem Behalter enthaltenen Abwassers, andererseits die Wärmerückgewinnung an der Frischwasserseite ermöglicht. In dem tiefsten Punkt der Bodenplatte des Behälters 4, in deren Mitte befindet sich die Entleerungsöffnung 13, d.h. das Rohrventil 12 ist zentral in dem zylindrischen Behälter angeordnet.

Einer der wichtigsten Teile der Anlage nach Fig. 1 ist der hier mit einem Viereck bezeichnete Reaktor 15, der zum Reagieren, Zustandebringen der Berührung zwischen den, aus der Entwässerungseinheit 6 über die Leitung 16 ankommenden feuchten Federn und dem von dem Behälter 4 über die Leitung 17 eingespeisten fetthaltigen Abwasser dient. Der Reaktor 15 kann in zahlreichen Versionen realisiert werden, aus denen sind einige in Fig. 2 bis 8 veranschaulicht, auf eine ausführliche Beschreibung kehren wir später zurück. Aus der in den Reaktor 15 einmündenden Leitung 16 ist die mit diskontinuierlicher Linie bezeichnete Leitung 16a abgezweigt, über welche die nassen Federn in den Behälter 4 geleitet werden können.

Der Reaktor 15 ist über die Leitung 18 mit dem Behälter 19 verbunden, der zur Aufnahme des mit Fett ge sättigten Federmaterials dient und periodisch entleert werden kann, während die Leitung 20 das Abwasser, das noch eine gewisse Fettmenge enthält, aus dem Reaktor 15 ableitet und an der Stelle 21 in die Leitung 22 einmündet, die wiederum das fettarme Abwasser von der Federentwässerungseinheit 6 ableitet.

Ein Teil des Wassers kann über die von der Leitung 22 abgezweigte Leitung 22a in die Entwässerungseinheit 6 zwecks Förderung der Federn rezirkuliert werden.

Das von der Entwässerungseinheit 6 ankommende Wasser und das von dem Reaktor 15 eintreffende, noch fetthaltige Wasser werden vereinigt über die Leitung 23 in den von dem Bogensieb 24 gebildeten Separator geleitet, wovon die abgetrennten festphasigen Verunreinigungen in den Behälter 24a gelangen, während das Fett enthaltende Wasser in das dekantierende-absetzende Objekt 25 gelangt.

Das Objekt 25 hat ein Becken 30, das in Draufsicht das Format eines Rechtecks zeigt, das Becken ist mit den, auf der Längsrichtung des Beckens senkrechten Trennwänden 26, 27 in Räume I, II und III unterteilt.

Die Bodenplatte des I. Raumes ist mit einer Neigung ausgestaltet und neigt von der Endwand des Beckens 30 zu der Ebene der Trennwand 26.

Entlang der Bodenplatte erstreckt sich die z.B. durch ein perforiertes Rohr oder Rohrgitter gebildete Belüftungskonstruktion 28, die sich einer /hier nicht dargestellten/, Pressluft mit einem Minimaldruck von 4 bar liefernden Quelle anschliesst. Die das Bogensieb 24 verlassende flüssige Phase - dem Pfeil f entsprechend - gelangt in den Raum I.

Die Trennwand 26 ragt von oben her in das Becken 30 hinein und darunter befindet sich die Durchflussöffnung 29, deren Querschnitt mit dem - dem Doppelpfeil q entsprechend - auf- und abwärts bewegbaren Plattenteil 26 eingestellt /geändert/ werden kann. Die Trennwand 27 geht von dem Boden des Beckens 30 aus und erstreckt sich nach oben, in Richtung des Wasserstands $v_2$, der mit Hilfe des in dem Raum III angeordneten Überlauf-Entleerungsrohrventil 31 geregelt werden kann, bzw. optimalisiert wird. Unten ist der hohle Ventilkörper 31b des Formats eines länglichen Zylinders und mit dem kegeligen Unterteil angeordnet, der mit der Überlauf-Entleerungskonstruktion 31 identisch ist, der untere konische Teil passt sich in die Entleerungsöffnung 32 des Beckens 30 ein. Der obere Teil des Ventilkörpers 31b ist unter Zwischenschaltung eines /hier nicht dargestellten/ Dichtungsrings mit der Rohrhülse 31a umschlossen, der - dem Doppelpfeil e entsprechend - auf- und abwärts bewegt werden kann, wodurch der Wasserstand $v_2$ geregelt wird. Durch Aufheben des Ventilkörpers 31b kann der ganze Raum III entleert werden.

Nun kehren wir zu der Trennwand 27 zurück: der über dem oberen Ende liegende Durchflussquerschnitt kann -dem Doppelpfeil k entsprechend - mit dem bewegbaren Plattenteil 27a eingestellt bzw. geändert werden.

Durch die Änderung des Durchflussquerschnitts der Öffnungen 29 und 33 können auch die Strömungsgeschwindigkeiten der Flüssigkeit geändert werden, wodurch hingegen die Aufenthaltsdauer und Dauer der Behandlung Aufschwemmen, Absetzen, beeinflusst werden. Neben der Regelung des Wasserstands ist daher die Möglichkeit der Anpassung zu den technologischen Parametern /Fettgehalt, Inhalt und Qualität des Schwebestoffes/ gegeben.

Damit in dem Objekt 25 die Bahn des Flüssigkeitsstroms die möglichst längste sei, wird die Form der Trennwände 26, 27 zweckmässig nach Fig. 1a gewählt. Der besseren Übersicht halber haben wir hier die Trennwände 26, 27 übereinander angeordnet dargestellt. Aus der Strömungsrichtung der Flüssigkeit hindurch das Objekt 25 betrachtet - in Fig. 1 von links nach rechts -ist auf dem unteren linken Teil der Trennwand 26 der Ausschnitt 26' ausgestaltet, während auf dem unteren rechtsseitigen Teil der Trennwand 27 der Ausschnitt 27' ersichtlich ist. Wasserzufuhr und -ausfuhr - d.h. in den Ebene v des aus dem Bogensieb 21 austretenden Speisestutzens 24' und der Entleerungsöffnung 32 /strichpunktierte Linie/ - erfolgen an den zwei entgegengesetzten Enden des Objekts 25, entlang der länglichen Seitenwand des Beckens, gegenüber dem Ausschnitt 26'. Die resultante Bewegungsbahn der Flüssigkeit ist in Fig. 1a mit diskontinuierlicher Linie und dem Referenzbuchstaben I bezeichnet.

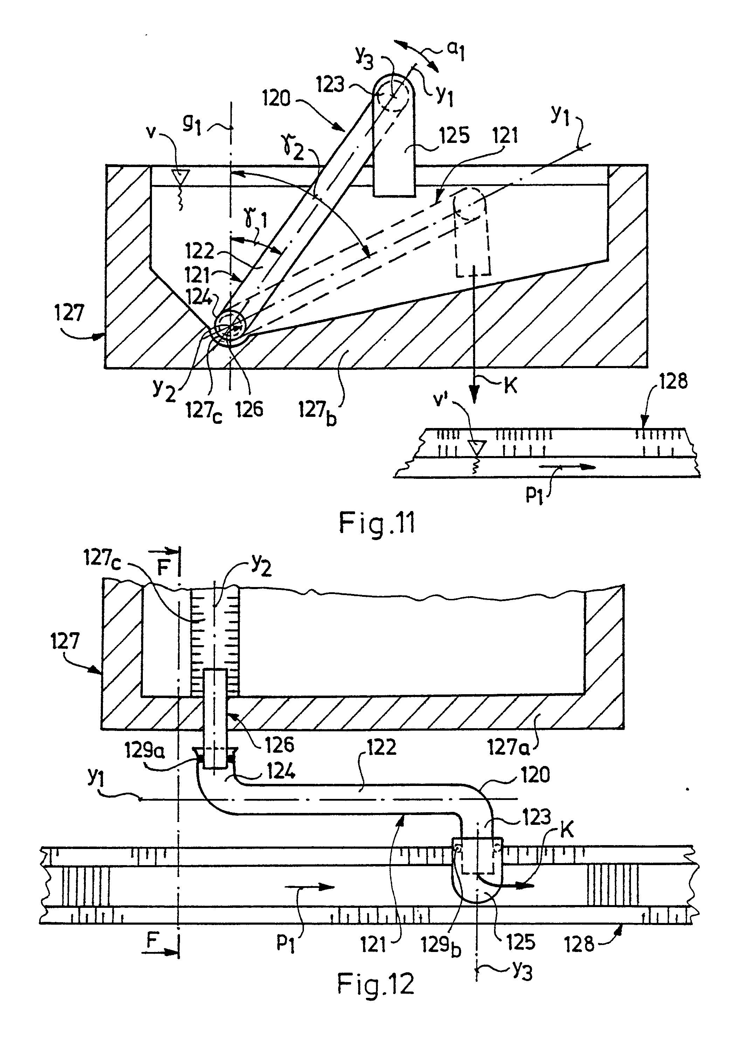

Dem mittleren zweiten Raum II des Objekts 25, zu dem am tiefsten liegenden Sumpf 34, zu dem der Beckenboden neigt, schliesst sich die Entleerungskonstruktion 35 an, die dem Pfeil n entsprechend verdreht werden kann, die Entleerungskonstruktion ist ausserhalb des Objekts 25 angeordnet. Eine ähnliche, gleicherweise ausserhalb des Objekts 25 angeordnete Entleerungskonstruktion 36 schliesst sich dem oberen Teil des Raumes I, bzw. dem Bereich des Wasserstands $v_2$ an; die Entleerungskonstruktion kann im Sinne des Doppelpfeils m verdreht werden. Die Entleerungskonstruktion 36 dient zur Dekantierung des Fetts aus dem Raum I, während die Entleerungskonstruktion 35 den dort abgesetzten Schlamm aus dem Raum II entfernt, die Funktion der beiden Konstruktionen wird im Zusammenhang mit Fig. 11 bis 13 ausführlich beschrieben.

In dem oberen Bereich des Raums III ist die Absetz-Lenkeinheit 37 angeordnet, die aus miteinander parallelen, voneinander mit seitlichen Abständen angeordneten, schrägen, im wesentlichen Z-förmigen Lamellen zusammengesetzt ist, die das Aufschwimmen der schwebenden Verunreinigungen verhindert und die Präzipitation fördert.

Fig. 2 stellt einen Reaktor 15 dar, der als ein Separator mit Drehtrommel ausgestaltet ist und das emulgiertes Fett enthaltende Abwasser und die nassen Federn miteinander in Berührung bringt. In die mit der schrägen Längsachse ausgestaltete, mit Filtermantel versehene Trommel 40 gelangen das fetthaltige Abwasser bzw. die Federn über die Leitungen 16, 17 siehe auch Fig. 1:, wonach die Federn die Trommel 40 über die Leitung 18 verlassen, während das Abwasser mit verringertem Fettgehalt aus dem Sammelbehälter 41 in die Leitung 20 fliesst und darin weiterströmt.

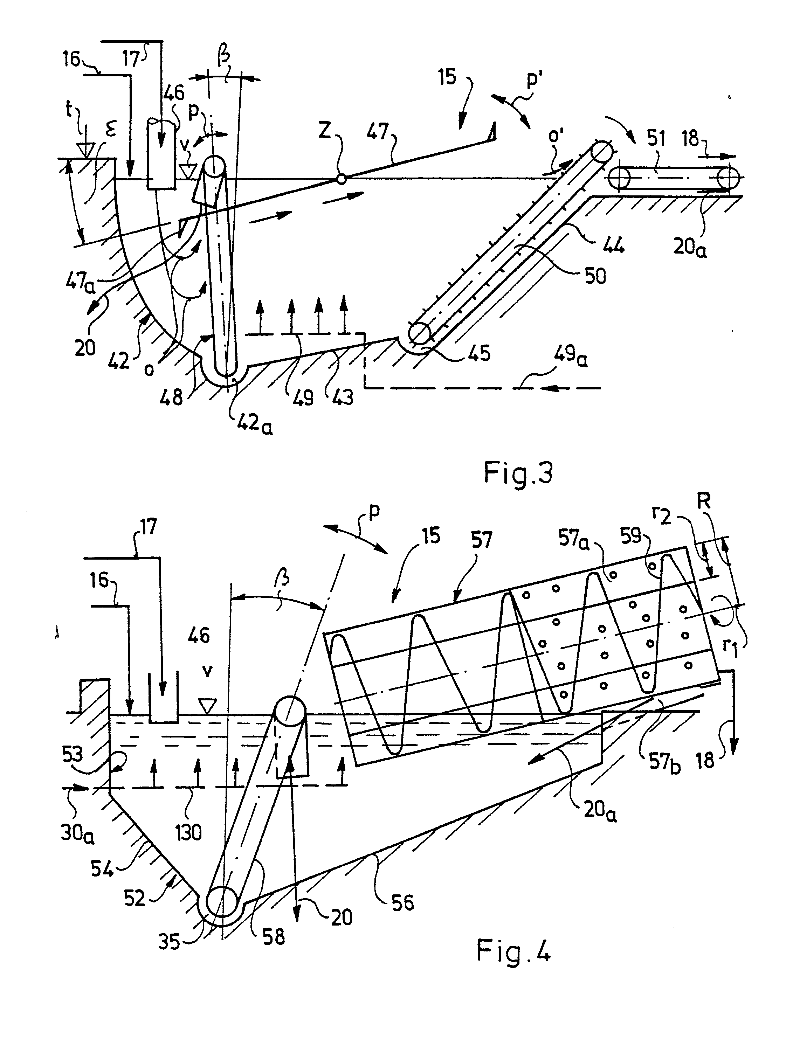

Fig. 3 zeigt den Behälter 42 des Feder-Fettreaktors, der eigentlich ein Becken ist und in der Draufsicht rechteckig ist, am Ende, wo eingespeist wird, geht die Endwand bogenförmig in die Bodenplatte über.

Im tiefsten Teil des Bodens ist der Sumpf 42a ausgebildet, von hier läuft die Bodenplatte erst mit einer milderen Neigung, dann mit einer steileren Neigung auf das Terrainniveau $t$ auf, diese Bodenstrecken sind mit den Referenznummern 43 and 44 bezeichnet.

Im Unterteil der Wandstrecke 44 ist die bogenförmige Mulde 45 vorhanden. Die das fetthaltige Abwasser fördernde Leitung 17 mündet in das Gefäss 46, dessen untere Ende unter dem Wasserspiegel $v$ liegt, während die Federn unmittelbar in den Behälter 42 gelangen.

Die Bahn des aufströmenden fetthaltigen Wassers und der Federn im Behälter ist mit den bogenförmigen Pfeilen $o$ veranschaulicht. Im Bereich der Wasseroberfläche $v$ ist eine, um die geometrische Achse $z$ im Sinne des Doppelpfeils $p'$ verkippbare, im wesentlichen Z-förmige Platte 47 angeordnet, die mit der Horizontalen einen veränderlichen Winkel E einschliesst. Der vordere, ins Wasser eingetauchte Schenkel 47a der Z-förmigen Platte 47 erstreckt sich nach unten, wodurch die unter die Platte aufgeschwommenen Federn und das Fett zu einem periodischen Aufenthalt gezwungen sind. Die Entleerungskonstruktion 48 dient zur Änderung des Flüssigkeitsstands $v$, die mit ihrem unteren Ende dem Sumpf 42a angeschlossen ist und mit dem oberen, der Zufuhrstelle des fetthaltigen Wassers und der Federn zugewandten Ende gegenüber dem Vertikalen unter einem Winkel B neigt. Die Entleerungskonstruktion 48 ist ausserhalb des Behälters 42 geführt und kann dem Doppelpfeil $p$ entsprechend verdreht werden. Im Zusammenhang mit Fig. 11 bis 13 wird die Konstruktion ausführlich beschrieben.

In dem unteren Teil des Beckens 42, zwischen dem Sumpf 42a und der Mulde 45 ist die Belüftungskonstruktion 49 angeordnet, die entweder durch ein perforiertes Rohr oder ein Rohrgitter gebildet ist und die einerseits der /hier nicht dargestellten/ Pressluftquelle, die die Pressluft über 4 bar Druck liefert, andererseits der /gleicherweise hier nicht dargestellten/ Wasserquelle angeschlossen ist. In diesem Fall scheint es auch zweckmässig, die Pressluft zu dem fetthaltigen Abwasser zu leiten.

Auf die Weise kann über die Leitung 49a das mit Luft gesättigte Wasser in den Behälter 42 geleitet werden. Aus dem Behalter 42 ragt ein, sich entlang der schrägen Wand 44 erstreckendes endloses Förderband 50 hinaus, das mit Schiebelementen /z.B. Gummifingern/ ausgerüstet ist und dessen Förderleistung /Fördergeschwindigkeit/ geändert werden kann. Von dem Förderband 50 gelangen die fetthaltigen-nassen Federn auf das Entwässerungsband 51, wovon die fetthaltigen Federn über die Leitung 18, das Abwasser mit verringertem Fettgehalt über die Entleerungskonstruktion 48 und die Leitung 20 austreten /siehe auch Fig. 1/.

Der Feder-Fettreaktor 15 nach Fig. 4 weist ein in Draufsicht rechteckiges Becken - Sammelbehälter - 52 auf, dessen tiefster Teil dort liegt, wo die Federn über die Leitung 16 und das fetthaltige Abwasser über die Leitung 17 eingespeist werden. Hier begrenzen die vertikale Stirnwand 53 und der steil nach innen neigende Bodenteil 54 das Becken. Auf dem tiefsten Punkt des Beckens ist der Sumpf 55 vorhanden, dem sich die ausserhalb des Beckens 52 angeordnete Entleerungskonstruktion 58 anschliesst, die den Wasserstand $v$ regelt, dem Doppelpfeil $p$ entsprechend verdrehbar ist und dadurch die Änderung des mit der Vertikalen eingeschlossenen Winkels ermöglicht /die Entleerungskonstruktion 58 wird im Zusammenhang der Fig. 11 bis 13 ausführlich beschrieben/.

Zur Verteilung des über die Leitung 17 ankommenden fetthaltigen Abwassers /siehe auch Fig. 1/ ist das Gefäss 46 vorgesehen, dessen untere Ende unter dem Wasserstand $v$ liegt. In dem tieferen, an der Seite der Einspeisung liegenden Teil des Beckens 54 ist unten die Belüftungskonstruktion 130 angeordnet, über welche das mit Luft gesättigte Wasser über die Leitung 130a in das Becken geleitet werden kann. Die letztere ist über eine Leitung der /hier nicht dargestellten/ Frischwasserquelle und der /gleicherweise nicht dargestellten/ Pressluftquelle angeschlossen, die Pressluft über 4 bar liefert. Das Becken 52 ist mit einer geringen Neigung ausgestaltet, entlang des langen Bodenteils 56 befindet sich der Filter 57 mit Drehtrommel, die eine schräge geometrische Achse $r_1$ aufweist. Weiterhin ist ein, mit der Trommel mitrotierender, sich entlang der Innenfläche des Trommelmantels erstreckender Ring 59 mit Schneckenförderung vorgesehen. Die Umdrehungszahl der Trommel 57a kann verändert werden. Die Höhe $r_2$ des Ringes 59 ist zweckmässig kleiner als die Hälfte des Radius R der Trommel 57a. Unter dem äusseren Ende der Trommel 57a ist die Mulde 57b ausgestaltet, die die filtrierte flüssige Phase in das Becken /Pfeil 20a/ rückführt. Die fetthaltigen Federn verlassen den Trommelfilter 57 an dessen oberem Ende und gelangen in die Leitung 18, während das Abwasser mit verringertem Fettgehalt durch die Entleerungskonstruktion 58 und die Leitung 20 abgeleitet wird.

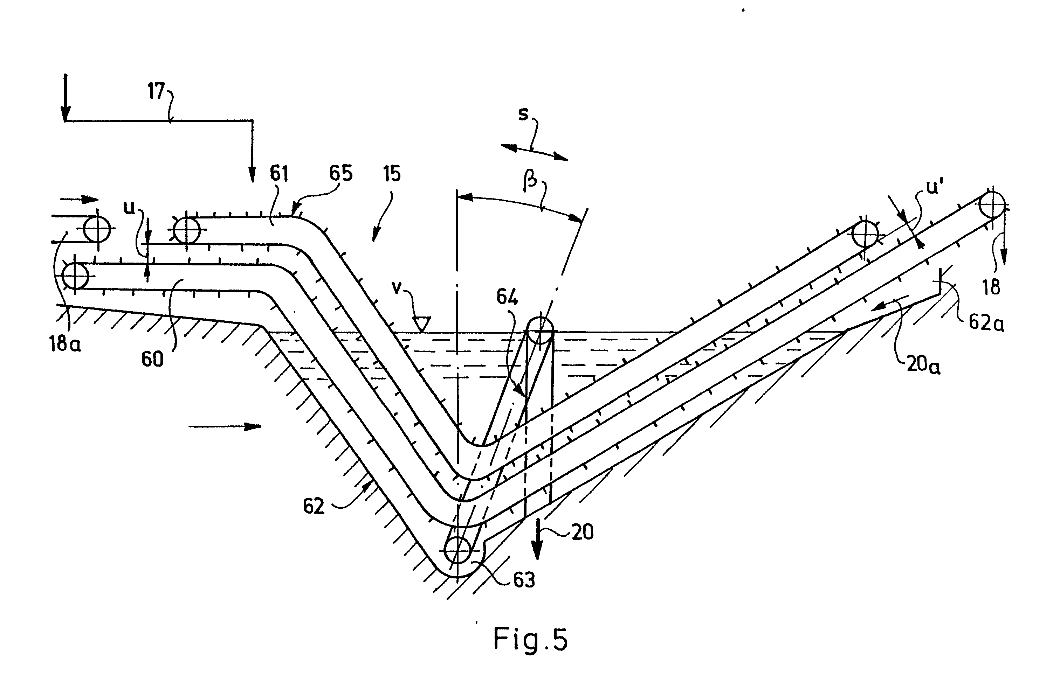

Der Reaktor 15 nach Fig. 5 weist ein Becken 62 mit dreieckigem Querschnitt auf, auf dem tiefsten Punkt ist der Sumpf 63 ausgestaltet, dem die ausserhalb des Beckens liegende Entleerungskonstruktion 64 angeschlossen ist; die Konstruktion kann im Sinne des Doppelpfeils s verdreht werden, wodurch der mit der Vertikalen eingeschlossene Winkel B und damit der Wasserstand $v$ geregelt werden können, währenddessen das fettarme Abwasser von dem Becken kontinuierlich in die Leitung 20 weiterbefördert wird /siehe auch Fig. 1/, im Bedarfsfall kann das ganze Becken entleert werden. Der Reaktor 15 weist eine weiterfördernde und entwässernde Konstruktion 65 auf, die aus den Förderbändern 60 und 61 besteht, die mit Schiebelementen, z.B. Gummifingern versehen sind, miteinander parallel verlaufen und der Abstand u dazwischen geändert werden kann. Das Förderband 18a - das mit beiden Enden über das obere Band 61 hinausragt - lässt die nassen Federn auf das längere untere Band 60 fallen; fetthaltiges Wasser wird über die Rohrleitung 17, noch ausserhalb des Beckens 62 eingespeist, beide Bänder 60, 61 - die in einer gebrochenen, dem Dreieckquerschnitt folgenden Linie geleitet sind - tauchen unter den Wasserstand v ein. Fetthaltige Federn werden über die Leitung 18 ausgeführt /siehe auch Fig. 1/, während das Sickerwasser über die Mulde 62a in das Becken 62 rückgeführt wird, aus dem Becken 62 gelangen die Federn mit Hilfe der Entleerungskonstruktion 64 in die Leitung 20 /auch in Fig. 1 dargestellt/.

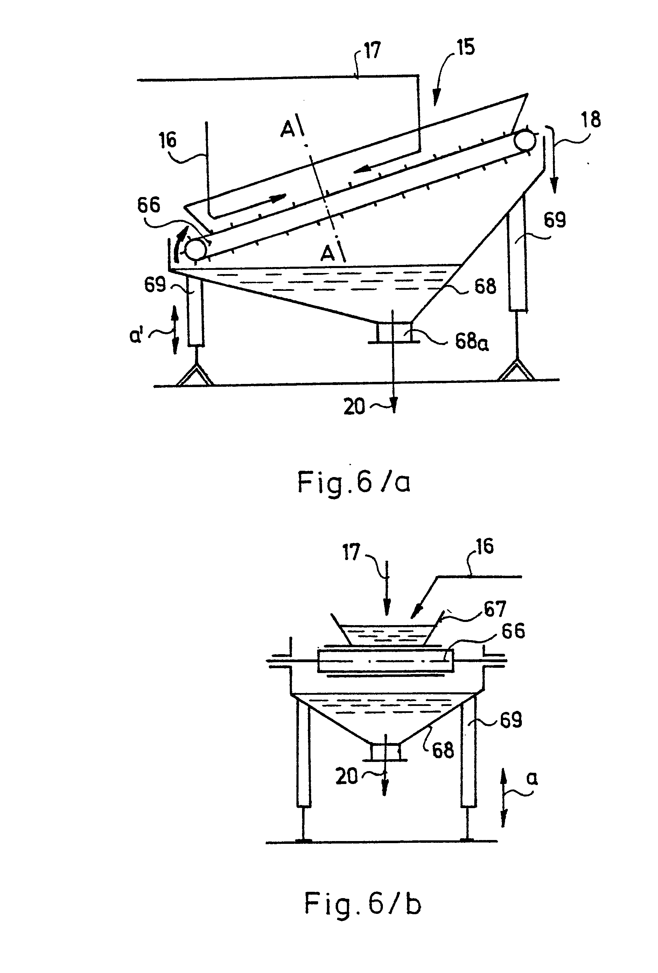

Der in Figuren 6a und 6b dargestellte Fett-Federreaktor 15 /Fig. 6b ist ein entlang der Linie A-A der Fig. 6a aufgenommener Schnitt/ verfügt über ein schräges, mit Schiebelementen /z.B. Gummifingern/ versehenes endloses Förderband 66, dessen oberem Strang eine trog artig ausgestaltete, unten und oben offene Mulde 67 angeschlossen ist.

Aus der Fig. 6b geht es eindeutig hervor, dass das Förderband 66 breiter ist als der Unterteil der Mulde 67. Nasse Federn werden über die mit Pfeil bezeichnete Leitung 16 im unteren Bereich des Förderbands 66, in die Mulde 67 eingespeist, während über die Leitung 17 von oben her fetthaltiges Wasser auf die nach oben tendierenden Federn geleitet wird /siehe Fig. 1/. Unter dem Band 66 und damit zusammengebaut ist der Behälter 68 vorgesehen, die den Behälter tragenden Füsse können in der höhe gestellt werden /Doppelpfeil a'/. Durch die Einstellung der Füsse 69 kann die Niegung des Bandes 66 geändert werden, gleicherweise besteht die Möglichkeit zur Regelung der Bandgeschwindigkeit. Fetthaltige Federn treten über die Leitung 18 aus, während das Abwasser mit dem geringeren Fettinhalt über den Auslaufstutzen 68a und die Leitung 20 das System verlässt.

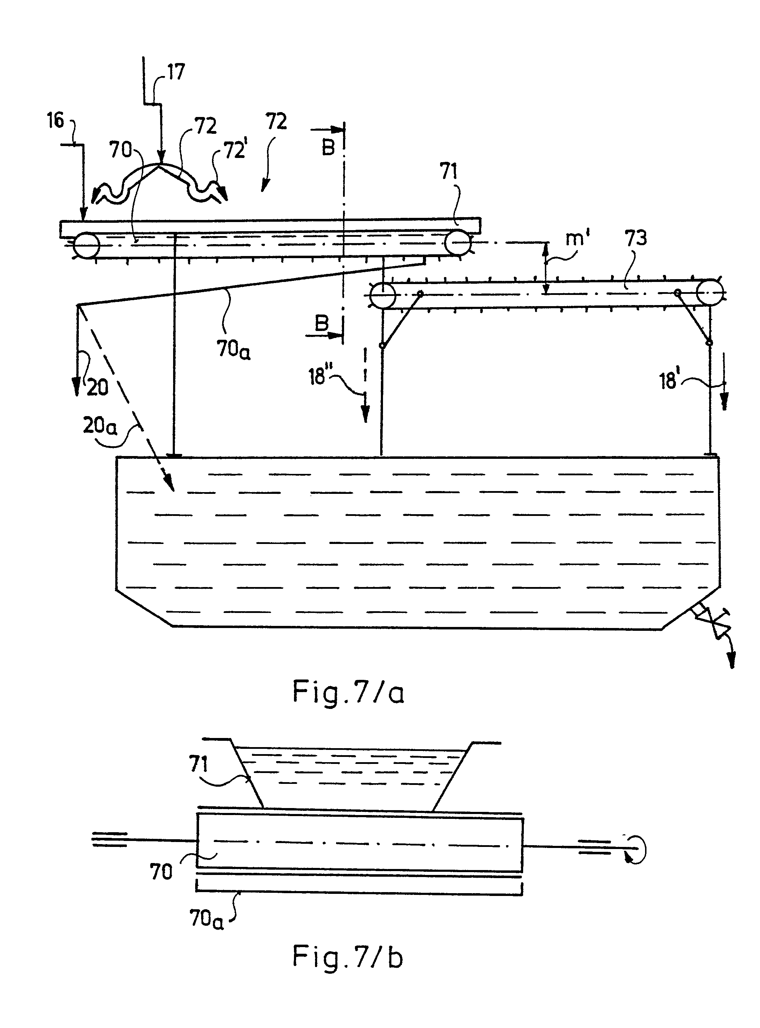

Der in Fig. 7a und 7b dargestellte Feder-Fettreaktor 15 Fig. 7b ist ein entlang der Linien B-B der Fig. 7a aufgenommener Querschnitt/ verfügt ebenfalls über ein, mit Schiebelementen versehenes Förderband 70, dem von oben her eine schmalere, unten und oben offene Mulde 71 angeschlossen ist. Über dem Band ist an der Einspeisungsseite ein aus Plattenkonstruktion gebildeter Staukörper 72 angeordnet, der aus dem von der Leitung 17 kommenden, fetthaltigen Abwasser den Wasservorhang 72' bildet. Die Drehrichtung des Bands 70 zugrundenehmend mündet die die nassen Federn fördernde Leitung 16 in die Mulde 71 vor dem Staukörper 72 ein, so dass der Wasservorhang 72' auf die Oberfläche der ausgebreiteten Federn gelangt. Unter dem Förderband 70, mit einem Abstand m' - in der Draufsicht mit einer gewissen Überlappung - ist ein zweites endloses Förderband 73 angeordnet, das reversibel angetrieben werden kann und ebenfalls mit Schiebelementen, z.B. Gummifingern versehen ist, auf diese Weise kann der Drehsinn geändert werden /siehe die mit kontinuierlicher bzw. diskontinuierlicher Linie ausgezogenen Pfeilpaare in Fig. 7a/. Das Abwasser mit verringertem Fettgehalt wird über die Leitung 20 abgeleitet, die sich der Mulde 70a unter dem Band 70 anschliesst. Die fetthaltigen Federn gelangen - den Pfeilen 18', 18" entsprechend - in den Kontainer 74, wovon der rückgebliebene Wassergehalt - in Form von Sickerwasser - über den Rohrstutzen 74a austritt.

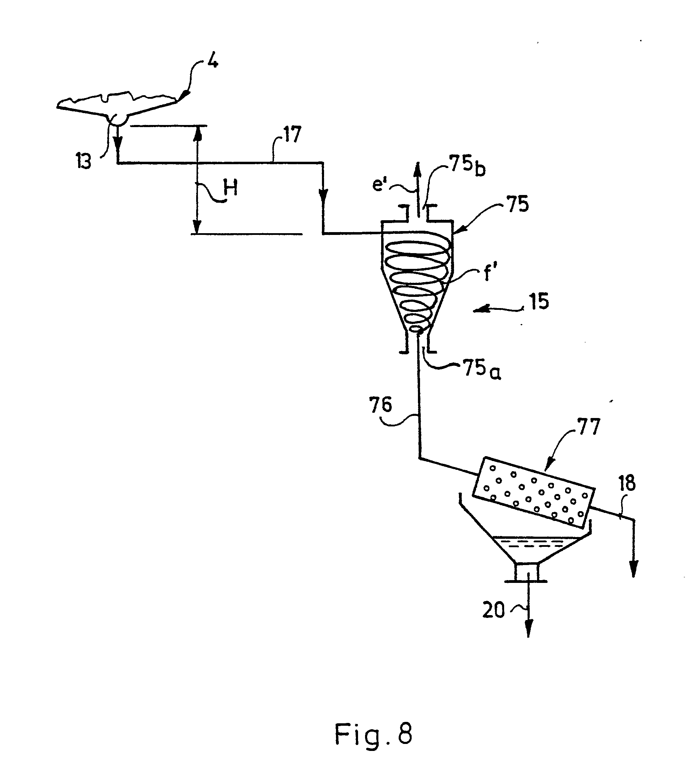

Der in Fig. 8 veranschaulichte Fett-Federreaktor 15 wird dann eingesetzt, wenn in den Ausgleichspufferbehälter nach Fig. 1 auch die von der Entwässerungseinheit 6 stammenden Federn über die Leitung 16a eingeleitet werden. In diesem Fall findet die erste Phase der Reaktion zwischen Federn und Fett bereits im Behälter 4 statt, d.h. ein Teil des emulgierten Fetts präzipitiert bereits im Behälter 4 auf die Federn. Die mit der Belüftungskonstruktion 10 eingespeiste Pressluft treibt nämlich die emulgierten Fetteilchen im Behälter 4 nach oben, die mit den auf der Oberfläche schwimmenden Federn in Berührung kommen und ein Teil des Fetts auf die Federn anhaftet. Nun gelangt das Gemisch - das aus fettigen Federn und Abwasser mit geringerem Fettgehalt besteht - tangentiell über die Leitung 17 in den Zyklon 75 des Reaktors 15, wo eine weitere Fettmenge auf den Federn abgebunden wird. Von dem Zyklon 75 gelangt das Material zu der Entwässerungseinheit 77, die ein Separator mit Drehtrommel ist, wovon das fettarme Abwasser über den Auslaufstutzen 75a und die Leitung 20 und die fetthaltigen Federn über die Leitung 18 austreten /siehe auch Fig. 1/. Mit Hinsicht darauf, dass das Material aus dem Ausgleichsbehälter 4 in den Zyklon 75 gravimetrisch ankommt, ist es als zweckdienlich betrachtet, wenn der Abstand H zwischen der Entleerungsöffnung 13 des Behälters 4 und der Speiseöffnung des Zyklons 3,0 m übertrifft. Oben ist der Zyklon 75 mit dem Belüftungsstutzen 75b versehen.

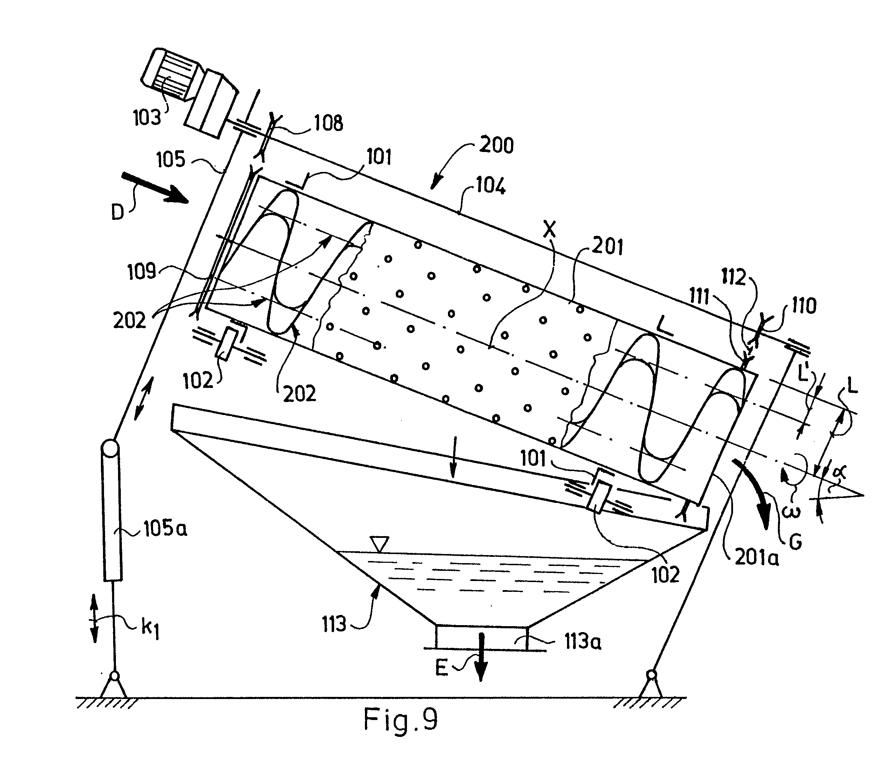

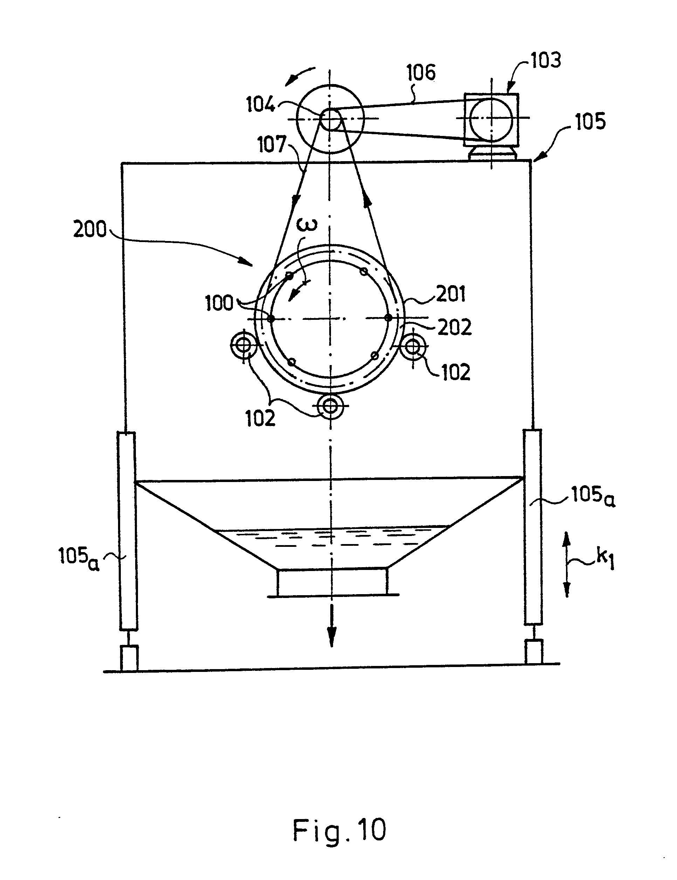

Der den Gegenstand der Erfindung bildende Trommelfilter 200 - der z.B. die Entwässerungseinheit 2 der Anlage nach Fig. 1 bilden kann - ist in Fig. 9 und 10 in Einzelheiten dargestellt. Der Trommelfilter 200 hat eine perforierte zylindrische Trommel 201, die rundum die geometrische Drehachse x des Trommelfilters - dem Pfeil C entsprechend - verdreht werden kann.

Innerhalb des Mantels 201 ist ein den Rotor bildender Ring 202 mit Schneckenförderung angeordnet, der in voller Länge des Mantels 201 sich erstreckt. Von dem

Ende der Einspeisung her neigt die geometrische Längsachse x gegenüber der Horizontalen nach unten und schliesst damit einen Winkel ein. Zur Versteifung des Ringes 202 mit der Schnecke dienen die mit der Achse x parallelen Stangen 100, die in den /hier nicht dargestellten/ Endplatten der Trommel 201 befestigt sind. Die Trommel 201 ist mit aus I-Stahlprofilen ausgestalteten äusseren Leitringen 101 versehen, mit denen die Trommel sich auf die gelagerten Rollen 102 aufstützt. Die Trommel 201 und darin der Rotor 202, d.h. der Ring mit der Schneckenförderung sind von einem gemeinsamen Getriebe 103 /Motor/, sowie der Welle 104 - Vorlegeachse - her angetrieben, undzwar mit Hilfe der endlosen Gurten 106, 107 und 112 bzw. der Treibscheibenpaare 108, 109 bzw. 110, 111, die in dem Trommelfilter 200 in dem Gestell 105 gelagert sind. Das Gestell hat teleskopische Füsse 105, die die Trommel am Speiseende unterstützen und die in der Höhe gestellt werden können /Pfeil $k_1$/, auf diese Weise kann der Winkel zwischen der Achse x und der Horizontalen geändert werden. Als Antriebsgurten können flache Gurten oder jene mit Keilprofil verwendet werden. Das System des Antriebs ist so gewählt, dass die Antriebsmodifizierung der Trommel 201 und der Rotors 202 abweichend ist, da das Verhältnis der Drehgeschwindigkeiten der Scheiben 108 und 109 von dem Verhältnis der Drehgeschwindigkeiten der Scheiben 110 und 111 abweicht, da die Durchmesser der Scheibenpaare verschieden sind. Die Antriebsmodifizierung kann auch so gewählt werden, dass die Umfangsgeschwindigkeit des Rotors 202 niedriger ist als die Umfangsgeschwindigkeit des perforierten Mantels 201, oder so, dass die Umfangsgeschwindigkeit des Rotors jene des Mantels übertrifft. Übrigens wird der Ring 202 mit der Schneckenförderung in der Drehbewegung von dem Mantel 201, bzw. der Trommel geführt, das bedeutet, das der Aussendurchmesser des Ringes praktisch mit dem Innendurchmesser des Mantels identisch ist, oder kleiner ist. Der Rotor kann gleichsinnig oder in entgegengesetzter Richtung im Verhältnis zu der Trommel sich verdrehen. Zweckmässig ist die Höhe 1' des Rotors 202 kleiner als die Hälfte des Radius L der Trommel 201. Unter dem Trommelmantel ist der Sammelbehälter 113 angeordnet, der über den Auslaufstutzen 113a verfügt.

Die Erfindungsgemässe, in den Fig. 11 bis 13 dargestellte Entleerungskonstruktion 102 ist zur Regelung, Einstellung des Wasserstands, zum Absaugen und Dekantieren des Schlammes, sowie zur vollkommenen Entleerung des Flüssigkeitsbehälters, des Beckens oder des abwasserbehandelnden Objekts bestens geeignet. Eine derartige Entleerungskonstruktion ist z.B. in dem Becken 25 der Anlage nach Fig. 1 oder in den Feder-Fettreaktor nach Fig. 3, 4 und 5 eingebaut.

Bei dem hier geschilderten Ausführungsbeispiel, wobei das flüssigkeitspeichernde bzw. behandelnde Objekt mit der Referenznummer 127 und der Wasserstand mit dem Buchstaben v bezeichnet worden ist, weist die Entleerungskonstruktion ein langschenkeliges Z-förmiges Rohrglied 121 auf, dessen gerades längeres Rohr 122 mit - aus den Bogenrohren 90° gebildeten - aus dem Rohr 122 einander entgegengesetzt hervorragenden oberen Stutzen und unteren Stutzen verbunden ist, diese umschliessen einen Winkel von 180°. Die geometrische longitudinale Mittelachse des Rohrs 122 bezeichneten wir mit $v_1$.

Das untere Bogenrohr 124 schliesst sich unter Zwischenschaltung eines wasserdichten Gummi-O-Rings 129a dem Rohrstutzen 126 an, dessen Aussendurchmesser kleiner ist als der Innendurchmesser des Bogenrohrs 127, welcher in die Wand 127a des Beckens 127 einbetoniert ist und aus dem Flüssigkeitsraum des Beckens 127, unmittelbar über dem Beckenboden 127b über das Becken hinausragt.

Als Erfolg dieses Anschlusses kann das ganze Rohrglied 121 um die geometrische Mittelachse $v_2$ des Rohrstutzens 126, dem in Fig. 11 eingezeichneten Doppelpfeil $a_1$ gemäss hin und her gedreht werden. Übrigens ist der Rohrstutzen 126 in einem, in der Bodenplatte 127 vorhandenen Sumpf 127b in dem untersten Bereich angeordnet. Dem oberen Knierohr 123 des Rohrglieds 121 ist ein, ebenfalls als Bogenrohr ausgestalteter, abwärts sich erstreckender Entleerungskopf 125 unter Zwischenschaltung des Dichtungsrings 129b /ein O-Ring/ angeschlossen, auf diese Weise kann der Rohrkopf 125 um die geometrische Längsachse $v_3$ des oberen Bogenglieds 123 verdreht werden. Der Rohrkopf nach Fig. 11 bis 13 mündet über dem ausserhalb des Objekts 127 geleiteten Abflusskanal, hier ist der Flüssigkeitsstand mit v', die Richtung der Flüssigkeitsbewegung mit einem Pfeil und mit dem Referenzbuchstaben p' bezeichnet.

Unter Bezugnahme auf Fig. 1 und 1a ist die Wirkungsweise der Anlage wie folgt:

Das Gemisch, das über die geschlossene Rohrleitung 1 ankommt und aus dem stückigen Abfall, Abwasser und Fett aus den verschiedenen Betriebsteilen der Geflügelschlachthauses /Stückelung, Entweiden, Vorkühlung/ zusammengesetzt ist, wird in der Entwässerungseinheit 2 in die feste und flüssige Phase verteilt. Zu dem Separator z.B. auf den Trommelfilter der Entwässerungseinheit wird periodisch Heisswasser oder Dampf zugeführt. Die stückigen Verunreinigungen gelangen in den Behälter 3, während die flüssige Phase in den Ausgleichspufferbehälter geleitet wird. Zu demselben Behälter wird das fetthaltige, stückige Verunreinigungen nicht enthaltende Abwasser über die Leitung 8 zugeführt. Der in dem Behälter 3 angesammelte stückige Abfall wird auf an sich bekannte Weise weiterverarbeitet, so z.B. wird der Abfall durch Aufschliessen des Proteins in Futter verarbeitet.

Man lässt die in den Behälter 4 geratene Flüssigkeit mit der Belüftungskonstruktion flotieren, das heisst, die emulgierten Fetteilchen lassen wir koagulieren, zur Erhöhung der Wirksamkeit der Präzipitation des Fettes und sonstiger Verunreinigungen kann ein die Proteinpräzipitation förderndes Mittel, z.B. Lignosulfonat dem Behälter 4 eingegeben werden, was übrigens in dem Futter als sich verwertender Stoff erscheint. Mit Hinsicht darauf, dass zur Ausscheidung des Geflügelfettes eine Temperatur um 20 C° optimal ist, gleichzeitig das in den Behälter 4 ankommende Wasser - sich aus der Technologie des Geflügelbetriebs ergebend -eine Temperatur von etwa 30 C° aufweist, wird das Wasser in dem Behälter 4 im Wärmeaustauscher 14 abgekühlt, wodurch auch Wärme rückgewonnen wird.

Das aufgeschwommene Fett tritt kontinuierlich von der Oberfläche des in dem Behälter 4 vorhandenen Abwassers durch das Überlauf-Entleerungsventil 12 aus und gelangt über die Leitung 17 in den Feder-Fettreaktor 15. Hier haftet der grösste Teil des emulgierten Fettes aus dem von dem Behälter 4 ankommenden Abwasser auf die von der Entwässerungseinheit 6 eintreffenden Federn mit einem maximalen Feuchtigkeitsgehalt von 60 % an, die auf ihren Oberflächen das 4-5-fache ihres Eigengewichts aus dem emulgierten Fett abbinden können. Die Reaktion kann in der Abhängigkeit der Gestaltung des Reaktors 15 auf die verschiedensten Weise vor sich gehen, Art und Weisen werden in Zusammenhang mit Fig. 2 bis 8 ausführlich beschrieben.

Falls Wassergeflügel im Betrieb verarbeitet werden, können deren Federn wirtschaftlich verwertet werden, so wäre die Anwendung der gesamten Federmasse zu der Reaktion zwischen Federn und Fett überhaupt nicht rationell.

In diesem Fall wird in den Behälter Schwefelsäure oder ein anderes zweckdienliches chemisches Medium eingespeist. Auf diese Weise werden die Ausscheidungsverhältnisse durch Abbau der Emulsion auf 3-4 pH-Wert eingestellt. Auf diese Weise werden Aufschwimmen und Koagulation erreicht, d.h. das Fett überläuft über das Überlauf-Entleerungsventil 12 und verlässt die Oberfläche des Behälters 4.

Die den Reaktor 15 verlassenden Fetthaltigen Federn werden in dem Kontainer 19 angesammelt und auf an sich bekannte Weise weiterbehandelt, z.B. zu Futter verarbeitet oder verbrannt.

Dem den Reaktor 15 über die Leitung 20 verlassenden Abwasser mit geringerem Fettgehalt wird bei Punkt 21 das aus der Entwässerungseinheit ankommende Wasser, bzw. der Teil, der über die Leitung 22a nicht rezirkuliert worden ist, zugeführt. Das von der Federlinie, in der Leitung 22 ankommende Wasser enthält kaum Fett, so wird das den Reaktor 15 verlassende Wasser verdünnt, der spezifische Fettgehalt /Fettkonzentration/ wird herabgesetzt; das derweise vermischte Wasser wird weiterbehandelt, indem es erst auf das Bogensieb 24 und nachher in die Kammer I des absetzenden-dekantierenden Objekts 25 geleitet wird. Die auf dem Bogensieb 24 ausgeschiedene Verunreinigung wird in dem Kontainer 24a angesammelt und auf an sich bekannte Weise weiterverarbeitet.

Mit den aus dem mit Luft gesättigten Wasser - das unten in den Raum I des Objekts 25 eingeleitet worden ist - expandierten Luftblasen - Flotation - lassen wir das emulgierte Fette oder einen Teil desselben koagulieren und auf die Oberfläche auftreiben, dasselbe geschieht mit den Verunreinigungen, deren spezifisches Gewicht jenes des Wassers nicht erreicht. Die aufgeschwommenen Stoffe werden mit Hilfe der Entleerungskonstruktion 36 dekantiert und aus dem Becken 25 entfernt. Verunreinigungen, deren spezifisches Gewicht grösser ist als das spezifische Gewicht des Wassers, die sich im Raum absetzten, rutschen auf der schrägen Bodenplatte des Raumes I hindurch die Spalte 29 der Trennwand 26 in den Sumpf 34 des Raumes II hinein. In demselben Sumpf werden die im Raum II sich präzipitierenden Verunreinigungen grösseren spezifischen Gewichts angesammelt, die von der unteren Öffnung 29 ausgehend in Richtung der oberen Öffnung 33, aus dem hier strömenden Abwasser ausgeschieden werden.

Aus dem Raum II wird der Schlamm periodisch, mit Hilfe der Entleerungskonstruktion 35 entfernt. Der Raum III des Beckens 25 ist auch als ein Absetzraum ausgestaltet; hier werden diejenigen Verunreinigungen ausgeschieden, deren spezifisches Gewicht mit jenem des über die Öffnung 33 über den Trennwand einfliessenden Abwassers identisch ist oder dieses übertrifft. Die Lamellen der Dämpfungskonstruktion 37 verringern das Aufschwimmen und sichern eine intensivere Absetzung, dabei kann die Aufenthaltsdauer einerseits durch die Änderung des Querschnittes der Durchflussöffnungen, andererseits durch die Einstellung des Wasserstands $v_2$ mit Hilfe des Rohrventils 31 beeinflusst werden, so kann man in der jeweiligen Abwasserzusammensetzung optimale Absetzungsverhältnisse gewährleisten.

Der im Raum II sich ansammelnde Schlamm wird durch das periodische Aufheben des Ventilkörpers 31b des Rohrventils 31 durch die Ablassöffnung 32 entfernt, während das gereinigte Wasser durch Überlauf /Pfeil o₃/ fortlaufend aus dem Becken über das Rohrventil austritt /Pfeil b₁/.

Wenn nun in dem Ausgleichspufferbehälter 4 die Behandlung mit Säure angewendet wird, wird das dort ausgeschiedene fetthaltige Wasser - den Reaktor 15 umgehend - unmittelbar in das Becken 25 geführt und dort auf die beschriebene Weise behandelt. Das vorbehandelte Abwasser kann auch der Behandlung mit Säure folgend in den Reaktor 15 eingeleitet werden, wo es mit dem unwertvollen Anteil der Federn der Wassergeflügel in Reaktion tritt.

Untenangeführt geben wir eine kurze Beschreibung über die Wirkungsweise der Reaktoren nach Fig. 2 bis 8.

In den den Reaktor 15 nach Fig. 2 bildenden Trommelfilter 40 werden sowohl fetthaltiges Abwasser, als auch die Federn am oberen Ende des Filters eingespeist. In dem Trommelfilter findet die Reaktion zwischen den Phasen statt, d.h. das Fett haftet auf die Federn an, die zwei separaten Phasen gestalten sich, aus nämlich die fettige Federn und das fettarme Abwasser, die wir bereits im Zusammenhang mit Fig. 1 beschrieben haben.

Die in den Behälter 42 des Reaktors 15 nach Fig. 2 eingespeisten Federn werden bereits in dem linksseitigen Teil des Behälters mit dem fetthaltigen Wasser vermischt, und nach dem Ablauf einer gewissen Zeit schwimmen die Federn - den Pfeilen o entsprechend - in den Bereich der Flüssigkeitsoberfläche v auf, übrigens kann die Aufenthaltsdauer durch die Änderung des Winkels der Platte 47 beeinflusst werden. Das Mass des Aufschwimmens der Federn, so die Dauer der Reaktion zwischen Fett und Federn ist bei einem kleineren Winkel grösser und vice versa. Verschiedene Faktoren /z.B. Federqualität, spezifische Fettmenge, Temperatur usw./ können die Änderung der Reaktionsdauer erfordern. Dadurch, dass das mit Luft gesättigte Abwasser hindurch die Belüftungskonstruktion 49 eingespeist wird, wird das in dem Abwasser emulgierte Fett mit den expandierenden Luftblasen zu den im Bereich der Oberfläche v schwimmenden Federn aufgetrieben, wo das Fett grösstenteils auf die Federn anhaftet, d.h. die Reaktion geht vor sich hin. Das Band 50 lässt die fettigen Federn - dem Pfeil o entsprechend - auf das Band 51 fallen, wovon die fetthaltigen Federn durch die Leitung 18 austreten, während das Wasser in das Becken rückfliesst /siehe Pfeil 20a/, wovon es mit Hilfe der Entleerungskonstruktion 48 in die Leitung 20 eingeführt wird und dort weiterfliesst /siehe auch Fig. 1/.

Die expandierenden Luftblasen in dem über die Belüftungskonstruktion 130 eingeleiteten, mit Luft gesättigten Abwasser - das in das Becken 52 des Reaktors 15 nach Fig. 4 eingeleitet worden ist - lassen den grössten Teil des emulgierten Fettes koagulieren und treiben das Fett zu den im Bereich der Oberfläche v schwimmenden Federn auf. Als Erfolg der Flächenberührung zwischen Fett und Feder wird das Fett auf den Federn abgebunden, wonach die Federn in den Filter 57 mit der Drehtrommel gelangen. In diesem strömt der Stoff aufwärts, während der mit der Trommel 57a mitdrehende Ring 59 mit der Schneckenförderung die fetthaltige Federphase quasi dekantiert, die am oberen Ende der Trommel 57a austritt und über die Leitung 18 weiterfliesst. Über die perforierte Trommel 57a fliesst das Wasser mit dem verringerten Fettgehalt in das Becken zurück /Pfeil 20a/, wovon es unter Zuhilfenahme der Entleerungskonstruktion 58 in die Leitung 20 weiterbefördert wird. Die Weiterbehandlung wurde im Zusammenhang mit Fig. 1 bereits geschildert.

In dem in Fig. 5 dargestellten Reaktor spielt sich die Reaktion in der Federfüllung zwischen den Bändern 60 und 61 ab. Auch in diesem Fall treibt das mit Luft gesättigte zugeführte Wasser das emulgierte Fett auf, das nach einer aktiven Berührung mit der Federfüllung auf die Federn anhaftet und dort abgebunden wird. Wenn nun auf der über die Wasseroberfläche v hinausragenden Austrittstrecke der Bänder 60, 61 die Spalte u zwischen den Bändern auf den Wert u' herabgesetzt wird, wird das Wasser aus der Federfüllung ausgepresst, mit anderen Worten, die Federn entwässert werden. Den jeweiligen Betriebsverhältnissen /z.B. Federqualität/ entsprechend wird der Wasserstand v auf den optimalen Wert mit Hilfe der Entleerungskonstruktion 64 geregelt. Die fetthaltige Federn gelangen von dem Band 60 in die Leitung 18, während das rückfliessende Wasser mit verringertem Fettgehalt von dem Randbereich 62a des Beckens in das Beckeninnere fliesst und in die Leitung 20 gelangt.

Zwischen der Fettphase des emulgiertes Fett enthaltenden, auf die auf dem Band 66 des Reaktors nach Fig. 6a, 6b schichtweise angeordneten und nach oben tendierenden Federn geleiteten Abwassers und den Federn findet die Reaktion zwischen Fett und Federn in der Mulde 67 statt und das Fett wird auf den Federn abgebunden. Durch die Änderung der Neigung und/oder der Bewegungsgeschwindigkeit des Bandes 60 können wir eine optimale, sich den jeweiligen Betriebsverhältnissen anpassende Reaktion erreichen. Wie es aus der Fig. 1 eindeutig hervorgeht, gelangen die fetthaltigen Federn in die Leitung 18, während das sich im Behälter 68 ansammelnde Wasser mit geringerem Fettgehalt in die Leitung 20 gelangt. Die Phasen werden auf eine, im Zusammenhang mit der Fig. 1 bereits beschriebene Weise behandelt.

Auf die auf dem Förderband 70 im Reaktor nach Fig. 7a, 7b schichtweise ausgebreiteten Federn wird das fetthaltige Wasser in Form eines Wasservorhangs, d.h. mit einer vergrösserten Fläche geleitet.

Auf der ausgebreiteten Federschicht findet die Reaktion zwischen Fett und Feder statt, das Fett haftet auf die Federn an, es gelangt auf das untere Förderband 73 und nachher in den Behälter 74. Durch Wechselung der Drehrichtung des unteren Bands 73 kann es erreicht werden, dass in dem Behälter 74 die schwer behandelbaren fetthaltigen Federn verhältnismässig ausgebreitet werden können, wie es mit den Pfeilen 18' und 18" veranschaulicht ist. Aus dem Kontainer 74 wird das Sickerwasser über den mit Verschlussarmatur versehenen Rohrstutzen 74a abgeleitet, während das fettarme Abwasser unter dem Band 70, in der Mulde 76a angesammelt wird und von dort in die Leitung 20 gelangt. Die getrennten Phasen werden auf die bereits geschilderte Weise behandelt.

In dem Zyklon 75 des Reaktors nach Fig. 8 kommen die tangentiell eingeleiteten, in dem Behälter 4 teilweise mit Fett gesättigten Federn und das emulgiertes Fett noch enthaltende Wasser in dem entlang des Zyklonmantels entstandenen Flüssigkeitsfilm in aktive Berührung, der überwiegende Anteil der rückgebliebenen Fettmenge wird hier abgebunden. Das sich in dem Zyklon ausstaltende Strombild wird mit dem spiralen Pfeil f', die austretende Luft mit dem Pfeil o' veranschaulicht. Die fetthaltigen Federn und das Wasser mit dem verringerten Fettgehalt werden in der Entwässerungseinheit 77 voneinander getrennt, die Phasen werden über die Leitungen 18, 20 entfernt und dann - wie bereits beschrieben - weiterbehandelt.

Der Trommelfilter 200 nach Fig. 9 und 10 funktioniert folgenderweise.

Das zu filtrierende Material, z.B. das die verschiedenen Abfälle aus den Betriebsteilen des Geflügelschlachthauses enthaltende Abwasser wird aus der mit dem Pfeil o/Fig.9/ bezeichneten Richtung von dem oberen Ende her in den Trommelfilter 200 mit der schrägen geometrischen Längsachse v eingespeist; innerhalb des perforierten Mantels, der in mit dem Pfeil angezeigter Richtung sich verdreht, verdreht sich - von dem Mantel geführt - der Ring 202 mit der Schneckenförderung in einer,jener der Trommel entgegengesetzten Richtung und mit davon abweichender Umfangsgeschwindigkeit. So wie das zu separierende Materialaggregat zu der Auslassöffnung 201a der Trommel sich nähert, gelangt die flüssige Phase über den perforierten Mantel 201 in den Behälter 113, wovon sie dem Pfeil E entsprechend weitergeleitet wird /bei der Anlage nach Fig. 1 in den Ausgleichspufferbehälter 4/, während die feste Phase über die Auslassöffnung 201a - dem Pfeil G entsprechend -aus dem Trommelfilter 200 austritt /z.B. bei der Anlage nach Fig. 1 in den Kontainer 3 gelangt/.

Dementsprechend führen der Mantel 201 des Trommelfilters 200 und der Rotor 202 eine zusammengesetzte Drehbewegung aus, wobei infolge der verschiedenen Umfangsgeschwindigkeiten der Rotor eine konstante Scherwirkung auf die, auf die Innenfläche des perforierten Mantels anhaften Verunreinigungen ausübt, die kontinuierliche Aktivierung, Erneuerung der separierenden Fläche gewährleistet. Dementsprechend ist der erfindungsgemässe Trommelfilter 200 quasi eine selbstreinigende verstopfungsfreie Konstruktion. Um zu vermeiden, dass das Fett die perforierten separierenden Flächen nicht verstopfe, wird periodische Heisswasser oder Dampf auf den Mantel 201 geführt. Durch die Änderung der Geschwindigkeit, bzw. Geschwindigkeitsdifferenz des Mantels 201 und des Rotors 202, sowie durch die Änderung des Neigungswinkels $\tau$ /Fig. 9/ kann auch die Dauer der Separierung geregelt werden, so kann man sich den sich ändernden Betriebsverhältnissen /Qualität des Abwassers, quantitative Änderung/ gut anpassen.

Die Wirkungsweise der Entleerungskonstruktion nach Fig. 11 bis 13 ist wie folgt.

In der in Fig. 11 mit voller Linie dargestellten Position liegt das obere Ende der Entleerungskonstruktion 120 über dem Wasserspiegel v, wobei die longitudinale geometrische Achse $v_1$ des Rohrs 122 mit der Vertikalen $g_1$ den Winkel $_1$ einschliesst. Wenn nun die Absicht besteht, von dem Boden des Beckens 127 den dort angesammelten Schlamm zu entfernen und/oder den Wasserstand v zu verringern, wird das Rohrglied 121 nach unten verdreht, undzwar so, dass es die in Fig. 11 mit diskontinuierlicher Linie dargestellte Stellung einnehme, in der die Achse $y_1$ bereits den Winkel $\gamma_2$ mit der Vertikalen einschliesst, wobei $\gamma_2$, $\gamma_1$ und der oberste Punkt der Entleerungskonstruktion 120 unter den Wasserstand v gelangen. Im Sinne des Gesetzes der Kommunikationsgefässe beginnt die Flüssigkeit in der Entleerungskonstruktion 120 von dem Inneren des Objekts 127 nach aussen, in Richtung des Ableitkanals 128 zu strömen, und gelangt - dem Pfeil K entsprechend - in den Ableitkanal 128. Während der Entfernung des Schlammes kommt eine das Absaugen des Schlammes hervorrufende Hebewirkung zur Geltung. Es ist offensichtlich, indem wenn sich um ein flüssigkeitsbehandelndes Objekt handelt, in welches Flüssigkeit kontinuierlich nachgespeist wird, verlässt auch die Flüssigkeit kontinuierlich die Entleerungskonstruktion 120, d.h. die Entleerungskonstruktion erfüllt auch die Funktion der Regelung des Wasserstands durch Überlauf.

Wenn nun das obere Ende der Konstruktion 120 unter das Niveau des Sumpfes 127c, ausserhalb des Beckens abgebogen wird, wird das Becken 127 vollkommen entleert. Es ist auch ganz und gar offensichtlich, indem wenn der untere Stutzen 124 der Entleerungskonstruktion 120 dem in der Höhe der Wasseroberfläche v liegenden und aus dem Flüssigkeitsraum ausgeführten Stutzen angeschlossen wird, unter Zuhilfenahme der Entleerungskonstruktion 120 die auf der Flüssigkeitsoberfläche schwimmenden Stoffe, z.B. Schlamm durch Abbiegen der Entleerungskonstruktion unter den Flüssigkeitsspiegel v dekantiert werden können, die Entleerungskonstruktion 36 nach Fig. 1 erfüllt eben eine solche Funktion. Zuletzt ist es auch offensichtlich, dass mit der Entleerungskonstruktion 120 alle die erwähnten Aufgaben auch während des Betriebs leicht erfüllt werden können.

Die Erfindung wird anhand eines Ausführungsbeispiels näher erläutert.

In der Rupfabteilung eines Broiler-Geflügelschlachthauses mit der Kapazität von 6000 St/Stunde entstehen 16.000 Liter federhaltiges Abwasser pro Stunde, aus dem die Federn in einem mechanischen Arbeitsgang -teilweise in einem Filter mit Drehtrommel, teilweise auf einem Bogensieb - entfernt werden. Man erhält 1600 Kg Feder pro Stunde mit einem Wassergehalt von 50 bis 60 %.

Auf der entweidenden Linie desselben Broiler-Geflügel verarbeitenden Werks entstehen etwa 14.000 l Abwasser, das 400-500 mg/l emulgiertes Fett, sonstige feste Verunreinigungen /z.B. Darmstücke, Kot, Fleischstücke, Kutikula usw./ enthält. Aus diesem Abwasser wird der überwiegende Teil der festen Phase mechanische, mit Hilfe eines sich drehenden Trommelfilters entfernt. Die ausgeschiedene Festphase wird - auf an sich be kannte Weise - durch Aufschliessen des Proteins verarbeitet und als Futter verwendet.

Die flüssige Phase, d.h. das von dem überwiegenden Anteil der festen Verunreinigungen befreite, emulgiertes Fett enthaltende Abwasser lässt man in dem nächsten Arbeitsgang mit den, von der Rupflinie kommenden Federn mit einem Feuchtigkeitsgehalt von 50-60 % reagieren. Im Laufe des Prozesses werden jedem Kubikmeter des fetthaltigen Abwassers 100 kg Federn mit einem Feuchtigkeitsgehalt von 50-60 % zugegeben. Darauffolgend werden Federn und das Abwasser 25 Minuten lang, also langsam. in turbulenzfreier Strömung miteinander in Berührung gebracht. Während dieser Zeit wird das Federmaterial mit dem sich anhaftenden Fett gesättigt.

In der nächsten Arbeitsphase werden die fetthaltigen Federn und die flüssige Phase voneinander getrennt. Nun enthält das Abwasser nur 100-120 g emulgiertes Fett pro Liter. Die fettigen Federn werden durch Aufschliessen des Proteins verwertet, das Produkt wird indirekt zur Fütterung der Tiere verwendet.

Zu dem Abwasser mit geringerem Fettinhalt wird fettarmes, aus der Entwässerung der Federn stammendes Abwasser geleitet, wodurch relativer Gehalt an emulgiertem Fett, d.h. die Fettkonzentration reduziert werden kann. Darauffolgend wird das Abwasser einer zweiten mechanischen Separation unterworfen, im Laufe deren die rückgebliebenen festen Verunreinigungen mit einem Bogensieb ausgeschieden werden.

Das Abwasser - das noch immer 100-120 mg emulgiertes Fett pro Liter enthält - wird einer Flotationsbehandlung unterworfen. Durch Zufuhr von Pressluft in das Abwasser lässt man das emulgierte Fett koagulieren, auf die Oberfläche auftreiben, wovon das Fett dekantiert wird. Der Flotation folgend nimmt der Fettgehalt auf 60-80 mg/l ab, dieser Wert liegt unter dem angegebenen Grenzwert. Sonstige schwebende, schwer absetzbare Verunreinigungen, sowie jene mit grösserem spezifischem Gewicht - oder wenigstens der grösste Teil - werden durch mechanisches Absetzen entfernt. Das ausgelassene Abwasser beansprucht keine weitere Behandlung, es kann in den natürlichen Rezipienten eingelassen werden.

Die mit der Erfindung verbundenen Vorteile sind wie folgt: unter Anwendung des erfindungsgemässen Verfahrens und der Anlage können wir das emulgierte Fett wirtschaftlich und mit höchster Wirksamkeit ohne die üblichen Schwierigkeiten aus dem Abwasser entfernen, wobei das zur Fettabscheidung verwendete Hilfsmaterial - die Federn der Geflügel - sowieso als Abfall in dem Geflügelschlachthaus erscheinen. Mit dem erfindungsgemässen Filter mit der Drehtrommel findet die Abtrennung der stückigen Verunreinigungen schnell und wirksam statt, da die Filterfläche selbstreinigend und verstopfungsfrei ist. Mit der erfindungsgemässen Entleerungskonstruktion, die eine einfache, leicht bedienbare Konstruktion ist, können die Entleerung der behandelnden Objekte, oder die Regelung des Wasserstands, Dekantieren des aufgeschwommenen Schlamms oder Absaugen des präzipitierten Schlammes schnell, mit höchster Sicherheit und praktisch ohne Energieaufwand durchgeführt werden.

Selbstverständlich beschränkt sich die Erfindung nicht auf die hier beschriebenen Verfahrensschritte und Ausführungsbeispiele, diese können innerhalb des durch die Patentansprüche definierten Schutzkreises in zahlreichen Versionen realisiert werden.

**Ansprüche**

1. Verfahren zur Reinigung von emulgiertes Fett enthaltenden, insbesondere aus einem geflügelverarbeitenden Betrieb stammenden Abwässern, im Laufe dessen aus dem von den stückigen Stoffen durch Filtrieren befreiten Abwasser das Fett durch Flotation entfernt wird, während die Verunreinigungen, deren spezifisches Gewicht jenes des Wassers übertrifft oder jenem gleich ist, durch Absetzen ausgeschieden werden, **dadurch gekennzeichnet,** dass wenigstens die Hälfte des gesamten Gehalts an emulgiertem Fett in dem Abwasser mit Geflügelfedern reagieren gelassen wird, wodurch das Fett auf den Federn abgebunden und durch die Separierung der fetthaltigen Federn aus dem Abwasser mit verringertem Fettgehalt ausgeschieden wird.

2. Verfahren nach Anspruch 1, **dadurch gekennzeichnet,** dass man das fetthaltige Abwasser mit Federn mit einem Wassergehalt von höchstens 60 Gew.%, vorteilhaft 50 bis 60 Gew.% reagieren lässt.

3. Verfahren nach Anspruch 1 oder 2, **dadurch gekennzeichnet,** dass man das zu reinigende Abwasser mit Geflügelfedern mit einem Wassergehalt von höchstens 60 Gew.% in einer Menge, die etwa 6-15 Gew.%, vorteilhaft 10 Gew.% der Abwassers entspricht, reagieren lässt.

4. Verfahren nach jedwelchem der Ansprüche 1 bis 3, **dadurch gekennzeichnet,** dass die Reaktion zwischen den feuchten Federn und dem fetthaltigen Abwasser durch den schonenden Kontakt der phasen mindestens 3 Minuten, vorteilhaft aber 20-30 Minuten lang, zweckmässig in einer turbulenzfreien gemeinsamen Strömung stattfindet.

5. Verfahren nach jedwelchem der Ansprüche 1 bis 4, **dadurch gekennzeichnet,** dass im Laufe der Reaktion zwischen Federn und fetthaltigem Abwasser Pressluft in den unteren Bereich der Abwassermasse eingeführt wird, wodurch die emulgierten Fetteilchen koaguliert und aufgeschwommen werden und zu den im Bereich der Oberfläche der Abwassermenge schwimmenden Federn gelangen.

6. Verfahren nach Anspruch 5, **dadurch gekennzeichnet,** dass in die Abwassermenge Pressluft mit einem Druck von 2-10 bar, vorteilhaft wenigstens 4 bar eingeführt wird.

7. Verfahren nach Anspruch 5 oder 6, **dadurch gekennzeichnet,** dass die Pressluft - der Einspeisung in die Abwassermenge vorangehend - vorteilhaft mit einem Teil des emulgiertes Fett noch enthaltenden Abwassers vermischt und darin absorbiert wird, wonach das mit Pressluft gesättigte Wasser in die zu reinigende Abwassermasse eingespeist wird, wo die Luft bei einem niedrigeren Druck - im wesentlichen atmosphärischen Druck - expandiert und auf diese Weise die im Abwasser enthaltenen emulgierten Fetteilchen und sonstige Verunreinigungen auf der Aussenfläche der entstandenen Luftblasen abgebunden und zu den Federn aufgetrieben werden.

8. Verfahren nach jedwelchem der Ansprüche 1 bis 7, **dadurch gekennzeichnet,** dass dem Abwasser - der Reaktion mit den Federn vorangehend -Präzipitationsmittel auf Proteinbasis, z.B. Lignosulfonat und/oder den Abbau der Emulsion fördernde Säure, z.B. Schwefelsäure zugegeben werden.

9. Verfahren nach jedwelchem der Ansprüche 1 bis 8, **dadurch gekennzeichnet,** dass das Abwasser der Reaktion mit den Federn vorangehend mindestens auf etwa 20 C° abgekühlt wird.

10. Verfahren nach jedwelchem der Ansprüche 1 bis 9, **dadurch gekennzeichnet,** dass man das emulgiertes Fett enthaltende Abwasser der Reaktion mit den Federn vorangehend flotieren lässt, wonach die Auf die Oberfläche aufgetriebene, mit Fett angereicherte Abwasserschicht dekantiert und mit den Federn in Reaktion gebracht wird.

11. Verfahren nach jedwelchem der Ansprüche 1 bis 10, **dadurch gekennzeichnet,** dass das Abwasser mit dem durch Feder-Fettreaktion verringerten Fettgehalt durch Flotation weiterbehandelt wird, das durch Flotation auf die Oberfläche gelangene Fett dekantiert wird, wonach man das Abwasser absetzen lässt und durch Separierung nach spezifischem Gewicht die Ver unreinigungen, deren spezifisches Gewicht jenes des Wassers übertrifft oder jenem gleich ist, entfernt werden.

12. Verfahren nach Anspruch 11, **dadurch gekennzeichnet,** dass das von den fetthaltigen Federn abgetrennte Abwasser mit verringertem Fettgehalt der Flotationsbehandlung vorangehend mechanisch filtriert wird.

13. Verfahren nach Anspruch 11 oder 12, **dadurch gekennzeichnet,** dass das abgetrennte Abwasser mit verringertem Fettgehalt - der Flotationsbehandlung vorangehend - mit fettarmem Wasser, das während der Entwässerung der zu der Feder-Fettreaktion zu verwendenden Federn in dem Rupfbetrieb des Geflügelschlachthauses entstanden ist, vermischt wird, wodurch der relative Fettgehalt - die Fettkonzentration - des von den fetthaltigen separierten Abwassers verringert werden kann.

14. Verfahren nach Anspruch 13, **dadurch gekennzeichnet,** dass ein Teil des während der Entwässerung der Federn entstandenen Wassers in den Rupfbetrieb zur Förderung der Federn rezirkuliert wird.

15. Anlage zur Durchführung des Verfahrens nach Anspruch 1, die eine zur Entfernung der stükkigen Verunreinigungen dienende Entwässerungseinheit /einen Filter/. zur Flotationsbehandlung des Abwassers geeigneten Behälter, sowie ein Absetzobjekt aufweist, **dadurch gekennzeichnet,** dass ein, das von der Entwässerungseinheit /2/ ankommende Abwasser aufnehmender, in seinem Unterteil eine Belüftungskonstruktion /10/ enthaltender Ausgleichspufferbehälter /4/, ein zum Kontaktieren des emulgiertes Fett enthaltenden Abwassers und der Federn dienender Reaktor /15/ vorgesehen sind, desweiteren ein Objekt /25/ enthalten ist, das aus dem den Reaktor /15/ verlassenden Abwasser mit verringertem Fettgehalt das Fett durch Flotation separiert, sowie die Verunreinigungen, deren spezifisches Gewicht jenes des Wassers übertrifft oder jenem gleich ist, durch Absetzen separiert./Fig. 1/.

16. Vorrichtung nach Anspruch 15, **dadurch gekennzeichnet,** dass in dem Ausgleichspufferbehälter /4/, der vorteilhaft das Format eines stehenden Zylinders aufweist, zur Abfuhr der Flüssigkeit aus dem der Flüssigkeit nahe liegenden Bereich, zur Regelung des Wasserstands /v₁/ und zur vollkommenen Entleerung des Behälters /4/ ein - zweckmässig zentral angeordnetes - Überlauf-Entleerungsrohrventil /12/ vorhanden ist. /Fig. 1/.

17. Anlage nach Anspruch 16, **dadurch gekennzeichnet,** dass das Rohrventil /12/ einen hohlen, unten und oben offenen, vorteilhaft länglichen, aufhebbaren-senkbaren Ventilkörper /12b/ hat, dessen Oberteil abgedichtet, unter Zwischenschaltung eines Gummi-O-Rings /12c/ von einer bewegbaren, gleicherweise unten und oben offenen Rohrhülse /12a/ um schlossen ist, und der Ventilkörper /12b/ mit einem konischen Unterteil /12d/ ausgestaltet ist, der in die in der Bodenplatte des Behälters /4/ - vorteilhaft im tiefsten Punkt derselben - ausgestaltete Entleerungsöffnung einpasst, und Schliessen und Öffnen derselben ermöglicht. /Fig. 1 und 14/.

18. Anlage nach jedwelchem der Ansprüche 15 bis 17, **dadurch gekennzeichnet,** dass in dem Ausgleichspufferbehälter /4/ ein Wärmeaustauscher /14/ angeordnet ist. /Fig. 1/.

19. Anlage nach jedwelchem der Ansprüche 15 bis 17, **dadurch gekennzeichnet,** dass der Ausgleichspufferbehälter /4/ mit einer Vorrichtung /7/ zur Dosierung des Koagulationsmediums und/oder sonstiger Chemikalien verbunden ist. /Fig. 1/.

20. Anlage nach jedwelchem der Ansprüche 15 bis 19, **dadurch gekennzeichnet,** dass in den Ausgleichspufferbehälter /4/ eine alternativ betätigbare, die Federn einführende Leitung /16a/ einmündet. /Fig. 1/.

21. Anlage nach jedwelchem der Ansprüche 15 bis 20, **dadurch gekennzeichnet,** dass zwischen dem Reaktor /15/ und dem dekantierenden-absetzenden Objekt /25/ eine zur Ausscheidung der stückigen Verunreinigungen geeignete Filtereinheit /24/, vorteilhaft ein Bogensieb oder ein Filter mit Drehtrommel eingesetzt ist. /Fig. 1/.

22. Anlage nach jedwelchem der Ansprüche 15 bis 21, **dadurch gekennzeichnet,** dass in die den Reaktor /15/ mit dem dekantierenden-absetzenden Objekt /25/ verbindende Leitung /20/ - vorteilhaft im Punkt 21' vor der Filtereinheit /24/ - eine Leitung /22/ einmündet, die aus der Entwässerung der zur Reaktion zwischen Fett und Federn zu verwendenden Federn entstandenes Abwasser mit niedrigem Fettgehalt fördert./Fig. 1/.

23. Anlage nach jedwelchem der Ansprüche 15 bis 22, **dadurch gekennzeichnet,** dass das dekantierende-absetzende Becken /25/ mit auf der resultanten Strömungsrichtung der darin strömenden Flüssigkeit senkrechten Trennwänden /26,27/ in mindestens drei Räume /I, II, III/ unterteilt ist, wobei in den ersten, zur Separierung der auf die Flüssigkeitsoberfläche aufschwimmenden Verunreinigungen durch Flotation dienenden Raum /I/ die das Abwasser einspeisende Leitung /24'/ einmündet, in dem unteren Teil des Raumes /I/ ist die Belüftungskonstruktion /28/ angeordnet; unter der den Raum /I/ begrenzenden Trennwand /26/ ist eine den ersten Raum /I/ mit dem zweiten Raum /II/ verbindende Durchflussöffnung /29/, zu der der Beckenboden neigt, desweiteren dem Bereich der Flüssigkeitsoberfläche des ersten Raums eine zur Dekantierung geeignete Entleerungskonstruktion /36/ angeschlossen; dem zweiten absetzenden Raum /II/, in dem unteren Bereich, zweckmässig dem in dem tiefsten Teil ausgestalteten Sumpf /34/, zur Ausscheidung der Verunreinigungen grösseren spezifischen Gewichts ist eine zum Absaugen des Schlammes vorgesehene Entleerungskonstruktion /34/ angeschlossen und über dem oberen Ende der zwischen dem zweiten Raum /II/ und dem dritten Raum /III/ vorhandenen Trennwand ist eine Durchflussöffnung /33/ ausgestaltet, die die Flüssigkeitskommunikation zwischen den Räumen /II, III/ gewährleistet, desweiteren, in dem dritten Raum /III/, der zur Ausscheidung der Verunreinigungen dient, deren spezifisches Gewicht jenem des Wassers gleich ist oder jenes übertrifft, dient, ist zur Ableitung der Flüssigkeit aus dem der Oberfläche nahe liegenden Bereich, sowie zur Regelung des Wasserstands /v₂/ im Becken /25/ und zur Entleerung des dritten Raumes /III/ ein Überlaufrohrventil /31/ angeordnet. /Fig. 3/.

24. Anlage nach Anspruch 23, **dadurch gekennzeichnet,** dass das Rohrventil /31/ einen hohlen, unten und oben offenen, aufhebbaren und senkbaren Ventilkörper /31b/ des Formats eines Rohrs, eines länglichen Zylinders aufweist und dessen Oberteil von einer, auf- und abwärts bewegbaren, ebenfalls unten und oben offenen Rohrhülse /31a/ dichtend umschlossen ist, desweiteren der Ventilkörper 31b/ mit einem konischen Unterteil ausgestaltet ist, der in die, in der Bodenplatte des Beckens /25/, im tiefsten Punkt deren ausgestaltete Entleerungsöffnung /32/ einpasst und diese schliesst bzw. öffnet./Fig. 1/.

25. Anlage nach Anspruch 23 oder 24, **dadurch gekennzeichnet,** dass in dem oberen Bereich des dritten Raums /III/ eine Absetz-Lenkeinheit /37/ angeordnet ist, die aus mit einander parallelen, vorteilhaft Z-förmigen Lamellen zusammengesetzt ist und das Aufschwimmen der Schwebestoffe verhindert.

26. Anlage nach jedwelchem der Ansprüche 23 bis 25, **dadurch gekennzeichnet,** dass der Querschnitt der Durchflussöffnung /29/ unter der ersten Trennwand /26/ und der Durchflussöffnung /33/ über der zweiten Trennwand mit vorteilhaft abwärts und aufwärts bewegbaren Plattenteilen /26a, 27a/ geändert werden kann. /Fig. 1/.

27. Anlage nach jedwelchem der Ansprüche 23 bis 25, **dadurch gekennzeichnet,** dass im unteren Teil der ersten Trennwand /26/ und im oberen Teil der zweiten Trennwand /27/ einander gegenüberliegende Ausschnitte /26', 27'/ vorhanden sind.

28. Anlage nach jedwelchem der Ansprüche 15 bis 27, **dadurch gekennzeichnet,** dass der zur Reaktion zwischen Fett und Federn dienende Reaktor /15/ durch einen, über dem Sammelbehälter angeordneten Filter /40/ mit Drehtrommel gebildet ist. /Fig. 2/.

29. Anlage nach jedwelchem der Ansprüche 15 bis 27, **dadurch gekennzeichnet,** dass in dem Unterteil des Feder-Fettreaktors ein Behälter /42/ mit einer Belüftungskonstruktion /49/ angeordnet ist und über der Belüftungskonstruktion /49/, im Bereich der Wasseroberfläche /v/, bei der Zufuhrstelle des emulgiertes Fett enthaltenden Abwassers - wobei die Einspeisung vorteilhaft über ein unter den Wasserstand /v/ sich eintauchendes Gefäss /46/ stattfindet - und in der nahliegenden Stelle der Federzufuhr, am Endteil nach unten hineinragenden, unter den Wasserspiegel eingetauchten Schenkel /47a/ aufweisende Platte /47/ angeordnet ist, aus dem Behälter /42/ ein schräges Förderband /50/ über den Wasserspiegel /v/ ausgeführt ist, dem ein die fetthaltigen Federn förderndes bzw. entwässerndes Band /51/ angeschlossen ist, unter welchem eine die flüssige Phase in den Behälter /42/ rückleitende, nach innen neigende Fläche ausgebildet ist, desweiteren, in dem Behälter /42/, vorteilhaft in dem im tiefsten Punkt ausgestalteten Sumpf /42a/ eine Entleerungskonstruktion /48/ angeordnet ist, die zur Entfernung des Abwassers mit dem verringerten Fettgehalt, zur vollkommenen Entleerung des Behälters /42/ und zur Regelung des Wasserstands /v/ während des Betriebs geeignet ist. /Fig. 3/.

30. Anlage nach Anspruch 29, **dadurch gekennzeichnet,** dass Federn und Abwasser am einen Ende des Behälters /42/ eingespeist werden, der Behälter /42/ eine in die Bodenplatte bogenförmig übergehende Endwand aufweist, zu deren tiefstem Punkt der Sumpf /42a/ angeschlossen ist, das Austragband /50/ mit Schiebelementen, z.B. mit Gummifingern versehen ist und an dem der Einspeisestelle gegenüberliegenden Ende des Behälters, entlang einer schrägen Wandstrecke /44/ und damit parallel das Band angeordnet ist, wobei die verdrehbare Platte /47/ - mit der Ausnahme der Zufuhr- und Ausfuhrstellen - im wesentlichen die ganze Behälterfläche in der Draufsicht bedeckt. /Fig. 3/.

31. Anlage nach jedwelchem der Ansprüche 15 bis 27, **dadurch gekennzeichnet,** dass in dem unteren Bereich des zur Reaktion zwischen Federn und Fett dienenden Reaktors /15/ ein Becken /52/ mit einer Belüftungskonstruktion /130/ vorhanden ist, im einen Ende dessen Federn und Abwasser eingeleitet werden, und an dem der Einspeisestelle gegenüberliegenden Ende ein Filter /57/ mit Drehtrommel mit schräger geometrischer Längsachse /r$_1$/ angeordnet ist, der mit seinem unteren Ende in das Abwasser eingetaucht ist und zur Trennung der fetthaltigen Federn und des Abwassers mit verringertem Fettgehalt dient und dessen obere Ende über den Wasserspiegel /v/ ausgeführt ist, unter dem äusseren Ende des Filters /57/ mit der Drehtrommel eine Mulde /57b/ ausgestaltet ist, die die filtrierte Flüssigkeitsphase in das Becken /52/ rückleitet, desweiteren dem Becken /52/, vorteilhaft dem in dem tiefsten Bereich liegenden Sumpf /55/ eine Entleerungskonstruktion /58/ angeschlossen ist, die das Abwasser mit dem verringerten Fettgehalt entfernt, den Behälter /42/ vollkommen entleert und auch zur Regelung des Wasserstands /v/ während des Betriebs geeignet ist. /Fig. 4/.

32. Anlage nach Anspruch 31, **dadurch gekennzeichnet,** dass ein rohrförmiges, unter den Wasserspiegel /v/ mit seinem unteren Ende eingetauchtes Gefäss /46/ vorgesehen ist, und die Belüftungskonstruktion /130/ sich zwischen der Endwand - an der Seite der Einspeisung - und dem Filter /53/ mit der Drehtrommel erstreckt. /Fig. 3/.

33. Anlage nach Anspruch 31 oder 32, **dadurch gekennzeichnet,** dass der Filter /57/ mit zweckmässig veränderlicher Umdrehungszahl einen perforierten zylindrischen Mantel /57a/ aufweist und innerhalb dessen ein sich entlang der Innenfläche der Trommel entlangziehender ortsfester, so mit der Trommel /57a/ mitdrehender Ring /59/ mit Schneckenförderung vorhanden ist, dessen Höhe /22/ zweckmässig kleiner ist als die Hälfte des Radius /R/ der Trommel /57a/. /Fig. 4/.

34. Anlage nach jedwelchem der Ansprüche 15 bis 27, **dadurch gekennzeichnet,** dass in dem zur Reaktion zwischen Fett und Feder dienenden Reaktor /15/ ein nach unten aufwärts sich erweiterndes Becken /62/ mit im wesentlichen dreieckigem Querschnitt vorhanden ist, in dem eine fördernde und entwässernde Konstruktion /65/ angeordnet ist, die durch zwei, in gebrochener Linie geführte parallele und gegenüber einander mit einem Abstand /u, u'/ geführte Förderbänder /60, 61/ gebildet ist, deren Enden an den einander gegenüberliegenden Enden des Beckens /62/ über dem Wasser spiegel /v/ liegen, desweiteren dem Becken /62/ - vorteilhaft dem in dem tiefsten Bereich ausgestalteten Sumpf /53/ - eine Entleerungskonstruktion /58/ angeschlossen ist, die zur Entfernung des in das Becken /62/ nach der Trennung der fetthaltigen Federn und der flüssigen Phase rückfliessenden Abwassers, zur vollkommenen Entleerung des Beckens /62/ und zur Regelung des Wasserstands /v/ während des Betriebs geeignet ist. /Fig. 5/.

35. Anlage nach Anspruch 34, **dadurch gekennzeichnet,** dass das untere Band /60/ mit beiden Enden über das obere Band /61/ hinausragt, wobei - die Fortschrittsrichtung zugrundenehmend - das vordere Ende des unteren Bandes /60/ als Zufuhrstelle der feuchten Federn und das hintere Ende als Ausfuhrstelle für die fetthaltigen Federn ausgestaltet sind. /Fig. 5/.

36. Anlage nach Anspruch 34 oder 35, **dadurch gekennzeichnet,** dass die Förder- und Entwässerungskonstruktion /65/ so ausgestaltet ist, dass der Abstand /u, u´/ zwischen den Bändern /60, 61/ geändert werden kann. /Fig. 5/.

37. Anlage nach jedwelchem der Ansprüche 15 bis 27, **dadurch gekennzeichnet,** dass der Reaktor /15/ ein, über dem auf Füssen stehenden Behälter /68/ liegendes, schräges, mit Schiebelementen, z.B. Gummifingern versehenes Förderband /66/ aufweist, dessen oberem Strang eine unten offene Mulde /7/ angeschlossen ist, die schmaler ist als das Band /66/, die Federn im Bereich des unteren Endes des Förderbands /66/ eingespeist werden, während in dem höher liegenden Bereich das fetthaltige Abwasser eingespeist wird, die fetthaltigen Federn am oberen Ende des Förderbands /68/ ausgeführt werden und zur Abfuhr des Abwassers mit geringerem Fettgehalt der Behälter /68/ mit einem Ausflusstutzen /68a/ versehen ist. /Fig. 6a, 6b/.

38. Anlage nach Anspruch 37, **dadurch gekennzeichnet,** dass die den Behälter /68/ unterstützenden Füsse /69/ wenigstens an der einen Seite in der Höhe gestellt werden können, wodurch die Schrägheit des Förderbands /66/ geändert werden kann. Fig. 6a, 6b/.

39. Anlage nach jedwelchem der Ansprüche 15 bis 27, **dadurch gekennzeichnet,** dass der Reaktor /15/ - in dem die Reaktion zwischen Fett und Federn stattfindet - ein oberes Förderband /73/ und ein darunter mit einem Abstand /m´/ liegendes unteres Förderband /73/ aufweist, unter dem letzteren ein zur Aufnahme der fetthaltigen Federn dienender Behälter /74/ angeordnet ist, dem oberen Strang des oberen Bandes /70/ schliesst sich eine unten offene Mulde /71/ an, über welcher in dem einen Endbereich, wo Federn und fetthaltiges Abwasser eingespeist werden, ein Staukörper /72/ vorhanden ist, der aus dem zugeführten Abwasser einen Wasservorhang bildet, wobei die Zufuhrstelle der Federn vor dem Staukörper /72/, vorteilhaft in der unmittelbaren Nähe des Bandendes vorgesehen ist; unter dem oberen Band /70/ befindet sich eine Mulde /70a/ mit geneigtem Boden, die die flüssige Phase, die bei der Trennung der fetthaltigen Federn und des Abwassers mit verringertem Fettgehalt entstand, ableitet, das untere Band /73/ ragt von dem oberen Band /70/, wo die Federn abgegeben werden, vorher, wodurch die von dem oberen Band /71/ ankommenden fetthaltigen Federn aufgenommen werden, und das untere Band /73/ als reversibles Legeband ausgestaltet ist. /Fig. 7a, 7b/.

40. Anlage nach jedwelchem der Ansprüche 15 bis 27, **dadurch gekennzeichnet,** dass der Reaktor /15/ einen Zyklon /75/ aufweist, in dem die von dem Ausgleichspufferbehälter /4/ ankommenden, dort mit dem Fett teilweise in Reaktion getretenen Federn und Abwasser wiederholt in Berührung gebracht werden, desweiteren eine Entwässerungseinheit /75/ vorgesehen ist, die das aus dem Zyklon austretende Gemisch in fetthaltige Federn und flüssige Phase teilt. /Fig. 8/.

41. Trommelfilter, insbesondere zur Durchführung des Verfahrens nach Anspruch 1, die eine auf einem Gestell angeordnete perforierte, mit einem Getriebe verbundene Trommel, einen ebenfalls mit dem Getriebe verbundenen, in der Trommel angeordneten Rotor und einen unter der Trommel vorhandenen Sammelbehälter aufweist, **dadurch gekennzeichnet,** dass der Rotor durch einen, sich entlang der Innenfläche der Innenfläche der Trommel /201/ erstreckenden, mit einer von jener der Trommel abweichenden Umfangsgeschwindig keit sich drehenden, mit einem Getriebe /103/ verbundenen Ring /202/ mit Schneckenförderung gebildet ist. /Fig. 9 und 10/.

42. Trommelfilter nach Anspruch 41, **dadurch gekennzeichnet,** dass der Rotor /202/ in der unmittelbaren Nähe der inneren Mantelfläche der Trommel /201/, vorteilhaft in voller Länge derselben sich erstreckt und in seiner Drehbewegung von der Mantelfläche geführt wird. /Fig. 9/.

43. Trommelfilter nach Anspruch 41 oder 42, **dadurch gekennzeichnet,** dass die Höhe des Rotors /1´/ kleiner ist als die Hälfte des Radius /L/ der Trommel. /Fig. 9/.

44. Trommelfilter nach jedwelchem der Ansprüche 41 bis 43, **dadurch gekennzeichnet,** dass der Rotor /202/ so mit dem Getriebe verbunden ist, dass dieser mit der Trommel und auch in der entgegengesetzten Richtung sich verdrehen kann.

45. Trommelfilter nach jedwelchem der Ansprüche 41 bis 44, **dadurch gekennzeichnet,** dass die geometrische longitudinale Mittelachse /x/ der Trommel /201/ in Richtung des Auslassendes schräg ausgebildet ist, der Trommelfilter /200/ mit einer Konstruktion, zweckmässig mit in vertikaler Richtung stellbaren Füssen /105a/ versehen ist, wodurch das Zufuhrende der Trommel aufgehoben oder gesenkt werden kann, desweiteren der Winkel zwischen der longitudinalen geometri schen Mittelachse /x/ und der Horizontalen geändert werden kann. /Fig. 9 und 10/.

46. Trommelfilter nach jedwelchem der Ansprüche 41 bis 45, **dadurch gekennzeichnet,** dass die Trommel /201/ und der - zweckmässig mit in der Länge geführten Stangen /100/ versteifte - Rotor /201/ von einem gemeinsamen Getriebe her, mit Hilfe von Antriebsgurten /106, 107, 112/ und Treibscheibenpaaren mit verschiedenen Durchmessern - verschiedene Geschwindigkeiten und gleichsinnige oder entgegengesetzte Verdrehung ergebend - angetrieben sind. /Fig. 9 und 10/.

47. Entleerungskonstruktion zur Entfernung der Flüssigkeit aus einem die Flüssigkeit speichernden und/oder behandelnden Objekt, insbesondere zur Dekantierung oder Absaugen des Schlammes und/oder zur vollkommenen Entleerung des Objekts, **dadurch gekennzeichnet,** dass aus dem Inneren des Objekts /127/ ein Rohrstutzen /126/ ausgeführt ist, dem ausserhalb des Objekts abgedichtet ein Rohrglied /121/ angeschlossen ist, das rundum die longitudinale geometrische Achse /v$_2$/ des Rohrstutzens /126/ verdreht werden kann. /Fig. 11 bis 13/.

48. Entleerungskonstruktion nach Anspruch 47, **dadurch gekennzeichnet,** dass ein Rohr /122/ vorgesehen ist, dessen Längsachse auf der geometrischen Längsachse des aus dem Objekt /127/ hervorragenden Rohrstutzens /126/ senkrecht verläuft, das Rohr mit wenigstens einem - zweckmässig 90° - Bogenrohr versehen ist, womit es unter Zwischenschaltung eines äusseren, zweckmässig elastisch deformierbaren O-Dichtungsringes /129a/ sich dem Rohrstutzen /126/ anschliesst.

49. Entleerungskonstruktion nach Anspruch 47 oder 48, **dadurch gekennzeichnet,** dass das Ende des Rohrs /122/, das dem Ende - das dem von dem Objekt hervorragenden Rohrstutzen /126/ angeschlossen ist - gegenüberliegt, ein verdrehbarer Entleerungskopf /125/ angeschlossen ist. /Fig. 11 bis 13/.

50. Entleerungskonstruktion nach Anspruch 49, **dadurch gekennzeichnet,** dass der Entleerungskopf /125/ dem zu dem Rohr /122/ gehörenden Bogenrohr von 90° angeschlossen ist, undzwar durch Zwischenschaltung eines die relative Verdrehung der einander anpassenden Elemente und deren axiale Bewegung nicht verhindernden, elastisch deformierbaren O-Dichtungsrings /129b/. /Fig. 11 bis 13/.

51. Entleerungskonstruktion nach jedwelchem der Ansprüche 47 bis 50, **dadurch gekennzeich-** net, dass das Rohrglied /121/ so ausgestaltet ist, dass es unter das Niveau der Grundplatte /127b/ des Objekts eingedreht werden kann.

Fig.1

Fig.1/a

Fig.2

Fig.3

Fig.4

Fig. 5

Fig. 6/a

Fig. 6/b

Fig.7/a

Fig.7/b

Fig. 8

Fig.9

Fig.10

Fig.11

Fig.12

EP 0 353 314 A1

Fig.13

Fig.14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | HU-B- 194 523 (BAROMFITERMELOEK EGYESUELESE)<br>--- | 1-51 | C 02 F 1/40<br>C 02 F 9/00<br>B 01 D 17/02<br>B 01 D 33/08<br>B 01 D 21/24 |
| X | GB-A-2 114 014 (VOEST-ALPINE)<br>* Seite 2, Zeile 112 - Seite 3, Zeile 5 *<br>--- | 41 | |
| A | WATER RESEARCH, Band 11, 1977, Seiten 873-877; F.E. WOODARD et al.: "New concepts in treatment of poultry processing wastes"<br>* Seite 874, rechte Spalte, Absatz 2; Seite 876, rechte Spalte *<br>--- | 5,11,12,41 | |
| A | DE-A-2 417 249 (ADCA-MATIC WASSER)<br>* Ansprüche *<br>--- | 1-40 | |
| A | US-A-3 992 292 (GRIMES)<br>* Figuren *<br>--- | 39 | |
| A | EP-A-0 027 359 (CROTTI et al.)<br>--- | | RECHERCHIERTE SACHGEBIETE (Int. Cl.4) |
| A | US-A-4 512 890 (MEDBURY)<br>--- | | C 02 F<br>B 01 D |
| A | CHEMICAL ENGINEERING, Band 82, Nr. 21, 6. Oktober 1975, Seiten 49,57-59; L.D. LASH et al.: "Primary-waste-treatment methods"<br>----- | | |

Der vorliegende Recherchenbericht wurde für alle Patentansprüche erstellt

| Recherchenort | Abschlußdatum der Recherche | Prüfer |
|---|---|---|
| DEN HAAG | 22-03-1989 | KASPERS H.M.C. |

EPO FORM 1503 03.82 (P0403)